# EUROPÄISCHE PATENTSCHRIFT

(11) **EP 0 864 816 B1**
(45) Veröffentlichungstag und Bekanntmachung des Hinweises auf die Patenterteilung: **24.09.2003**
(21) Anmeldenummer: 98103849.0
(22) Anmeldetag: 05.03.1998
(51) Int. Cl.: F24D 12/02, F24H 1/10

(54) **Verfahren und Vorrichtung zur Nutzung der Restwärme eines Abgases einer Feuerungsanlage**
Procedure and installation for recovering the residual heat in the fumes of a furnace
Procédure et installation pour la récupération de la chaleur résiduelle dans les fumées d'un foyer

(30) Priorität: 10.03.1997 DE 19709804
(43) Veröffentlichungstag der Anmeldung: 16.09.1998
(73) Patentinhaber: Deutsches Zentrum für Luft- und Raumfahrt e.V., 51147 Köln (DE)
(72) Erfinder: Buschulte, Winfried, Prof. Dr.-Ing., 74196 Neuenstadt a.K. (DE)
(74) Vertreter: Hoeger, Stellrecht & Partner

(56) Entgegenhaltungen:
- EP-A- 0 089 036
- EP-A- 0 814 306
- DE-A- 4 308 310
- DE-A- 19 609 014
- FR-A- 2 543 663
- US-A- 4 580 530
- US-A- 4 999 167

## Beschreibung

Die Erfindung betrifft ein Verfahren zur Nutzung der Restwärme, welche die restliche fühlbare und die latente Wärme umfaßt, eines Abgases einer Feuerungsanlage, insbesondere einer Ölfeuerungsanlage, bei dem das Abgas in einem Restwärmetauscher Wärme an ein Zwischenträgermedium abgibt und das Zwischenträgermedium zumindest zeitweise Wärme an Heizwasser in einem Heizkreis abgibt.

Ferner betrifft die Erfindung eine Vorrichtung zur Nutzung der Restwärme, welche die restliche fühlbare und die latente Wärme umfaßt, eines Abgases einer Feuerungsanlage, insbesondere einer Ölfeuerungsanlage, welche einen Restwärmetauscher umfaßt, in dem Abgas Wärme an ein Zwischenträgermedium abgibt, und welche einen Heizkreis umfaßt, an den durch das Zwischenträgermedium Wärme abgebbar ist.

Weiter betrifft die Erfindung eine Abgas-Wärmetausch-Einheit zur Nutzung der Restwärme, welche die restliche fühlbare und die latente Wärme umfaßt, eines Abgases einer Feuerungsanlage, insbesondere einer Ölfeuerungsanlage, in der das Abgas Wärme an ein Zwischenträgermedium abgibt, durch welches zumindest zeitweise Wärme an Heizwasser in einem Heizkreis abgebbar ist.

Solche Verfahren und Vorrichtungen sind aus dem Stand der Technik bekannt.

Bei den Verfahren und Vorrichtungen, welche in den nicht vorveröffentlichten deutschen Patentanmeldungen mit den Aktenzeichen 196 21 990.6 und 195 43 449.8 beschrieben sind, wird das Abgas der Feuerungsanlage einem Restwärmetauscher, insbesondere einem Monodispers-Restwärmetauscher zugeführt und aus dem umlaufenden Zwischenträgermedium werden durch Neutralisation die bei der Verbrennung entstandenen Verunreinigungen, insbesondere Schwefeldioxid, ausgewaschen.

Die EP-A-0 089 036 offenbart ein Verfähren zum Reinigen von Abgas und Rückgewinnung von Wärme, insbesondere aus einer Feuerungsanlage, bei dem das Abgas mit einer im Kreislauf gefahrenen Waschflüssigkeit in Kontakt gebracht wird, die Zusätze enthält, welche im Abgas enthaltene Schadstoffe binden, wobei die dabei entstehenden Verbindungen aufoxidieren und aus dem Abgas entfernt werden. Es wird dabei während des Waschvorgangs dem Abgas gleichzeitig Wärme entzogen und diese dem Zulauf den in der Feuerungsanlage zu erwärmenden Fluids oder einem anderen Wärmeverbraucher zugeführt.

Der vorliegenden Erfindung liegt die Aufgabe zugrunde, ein Verfahren der eingangs genannten Art derart zu verbessern, daß ein gegenüber herkömmlichen Verfahren größerer Anteil der Restwärme des Abgases genutzt werden kann.

Diese Aufgabe wird bei dem eingangs genannten Verfahren, erfindungsgemäß dadurch gelöst, daß das Zwischenträgermedium ein Abgaskondensat ist und daß das Abgas nach Durchströmen des Restwärmetauschers mit Wärmeabgabe an das Zwischenträgermedium zur Reinigung einem Abgasreinigungsreaktor zugeführt wird, wobei das Zwischenträgermedium in einem ersten Kreislauf durch den Restwärmetauscher zur Wärmeaufnahme aus dem Abgas geführt wird und ein Reinigungsmedium in einem zweiten Kreislauf durch den Abgasreinigungsreaktor zur Abgasreinigung geführt wird.

Das erfindungsgemäße Konzept bietet den Vorteil, daß der Schritt der Wärmeabgabe an das Zwischenträgermedium und der Schritt der Abgasreinigung im wesentlichen voneinander getrennt sind und damit diese beiden Einzelschritte jeweils optimiert werden können, um die Restwärme des Abgases effektiv zu nutzen und das Abgas mit einem hohen Reinigungsgrad zu reinigen.

Wird ein Restwärmetauscher gleichzeitig auch zur Abgasreinigung verwendet, ergibt sich das Problem, daß der Strom an Zwischenträgermedium, welches gleichzeitig auch als Reinigungsmedium wirkt, im Restwärmetauscher nur mit einer geringen Temperaturdifferenz erwärmt wird, da zur Abgasreinigung eine große Menge an Reinigungsmedium den Restwärmetauscher durchströmen muß. Um die dadurch gewonnene Wärme an das Heizwasser in dem Heizkreis zu übertragen, muß ein Zwischenträger-Heizwasser-Wärmetauscher eine sehr große Übertragungsfläche aufweisen. Außerdem bleibt der Wärmeübertragungsgrad geringer, weil an einem Ausgang des Zwischenträgermedium-Heizwasser-Wärmetauschers stets eine endliche Temperaturdifferenz besteht, die insbesondere dann den Wirkungsgrad des Verfahrens verringert, wenn die Temperaturspreizung zwischen eintretendem und austretendem Zwischenträgermedium klein ist. Außerdem muß die Leistung einer Pumpe, die das Zwischenträgermedium befördert, groß sein, da ein großer Massestrom an Zwischenträgermedium umgewälzt werden muß.

Dadurch, daß bei dem erfindungsgemäßen Verfahren der Gesamtvorgang der Restwärmegewinnung aus dem Abgas und die Reinigung und insbesondere Entschwefelung des Abgases in zwei Teilschritte untergliedert ist, läßt sich mit dem ersten Teilschritt die Restwärme im wesentlichen vollständig entziehen und im zweiten Teilschritt die Reinigung, welche bereits teilweise im ersten Teilschritt stattfindet, vervollständigen, wobei ein Wärmeaustausch zwischen dem Reinigungsmedium und dem Abgas beim zweiten Teilschritt im wesentlichen nicht stattfindet.

Dadurch läßt sich einerseits ein hoher Wirkungsgrad der Wärmeübertragung aus dem Zwischenträgermedium an das Heizwasser in dem Heizkreis erreichen, da mit einem gegenüber dem Stand der Technik geringeren Massestrom an Zwischenträgermedium gearbeitet werden kann, und andererseits läßt sich ein hoher Gütegrad der Abgasreinigung, beispielsweise mit Entschwefelungsraten von 99 %, erreichen.

Durch das erfindungsgemäße Verfahren wird auch der Wärmeübertrag vom Abgas auf das Zwischenträgermedium im Restwärmetauscher verbessert, da die Verweilzeit des Zwischenträgermediums im Restwärmetauscher bei einem geringeren Massestrom erhöhbar ist.

Besonders vorteilhaft ist es, wenn das Zwischenträgermedium in einem ersten Kreislauf durch den Restwärmetauscher zur Wärmeaufnahme aus dem Abgas geführt wird. Durch einen geschlossenen Kreislauf des Zwischenträgermediums läßt sich die Wärmeabgabe an das Heizwasser bei geringen Betriebskosten optimieren.

Weiter ist es besonders vorteilhaft, wenn ein Reinigungsmedium in einem zweiten Kreislauf durch den Abgasreinigungsreaktor zur Abgasreinigung geführt wird, so daß durch einen solchen Kreislauf ebenfalls die Betriebskosten bei optimaler Abgasreinigung verringert sind.

Es ist vorgesehen, daß das Zwischenträgermedium ein Abgaskondensat ist. Ein solches Zwischenträgermedium kann optimal Wärme auf dem Abgas aufnehmen und Wärme an das Heizwasser abgeben.

Vielfältige Steuerungs- und Regelungsmöglichkeiten ergeben sich, wenn das Reinigungsmedium aus dem gleichen Medium gebildet ist wie das Zwischenträgermedium.

In einer besonders günstigen Variante einer Ausführungsform werden das Zwischenträgermedium und das Reinigungsmedium parallel in dem ersten und im zweiten Kreislauf geführt. Auf diese Weise läßt sich einerseits die Wärmeaufnahme des Zwischenträgermediums aus dem Abgas mit der Wärmeabgabe an das Heizwasser und die Reinigung des Abgases durch das Reinigungsmedium optimieren.

Um die Beschädigung einer erfindungsgemäßen Vorrichtung insbesondere durch saure Strömungsmedium-Komponenten zu verhindern, ist es vorteilhaft, wenn das im ersten Kreislauf strömende Zwischenträgermedium und/oder das im zweiten Kreislauf strömende Reinigungsmedium neutralisiert wird.

Besonders vorteilhaft dabei ist es, wenn das Zwischenträgermedium und das Reinigungsmedium durch einen Führungsabschnitt strömt, welcher dem ersten und zweiten Kreislauf gemeinsam angehört. Dadurch lassen sich Strömungswege einsparen. Insbesondere ist es dann vorteilhaft, wenn das Zwischenträgermedium und das Reinigungsmedium durch einen Neutralisator geführt wird, welcher in dem Führungsabschnitt angeordnet ist. Dadurch kann das Zwischenträgermedium und das Reinigungsmedium durch einen einzigen Neutralisator neutralisiert werden, so daß der konstruktive Aufwand und die Betriebskosten verringert sind.

Damit das Zwischenträgermedium in dem ersten Kreislauf strömt, ist es vorteilhaft, wenn es durch eine erste Pumpe in dem ersten Kreislauf befördert wird. Ebenso ist es vorteilhaft, damit das Reinigungsmedium in den zweiten Kreislauf strömt, daß dieses durch eine zweite Pumpe in dem zweiten Kreislauf befördert wird. Dadurch können die jeweiligen optimalen Durchflußgeschwindigkeiten für das Zwischenträgermedium in dem ersten Kreislauf bzw. für das Reinigungsmedium im zweiten Kreislauf eingestellt werden.

In einer günstigen Variante einer Ausführungsform ist es vorgesehen, daß das Zwischenträgermedium und das Reinigungsmedium durch eine gemeinsame Pumpe befördert werden, welche in dem gemeinsamen Führungsabschnitt des ersten und des zweiten Kreislaufs angeordnet ist. Dadurch kann auf Pumpen jeweils in dem ersten und dem zweiten Kreislauf verzichtet werden. Dazu weist die gemeinsame Pumpe einen ersten Ausgang zur Beförderung von Zwischenträgermedium im ersten Kreislauf und einen zweiten Ausgang zur Beförderung von Reinigungsmedium im zweiten Kreislauf auf.

Besonders günstig ist es dann, wenn die gemeinsame Pumpe, bezogen auf die Strömungsrichtung nach dem Neutralisator angeordnet ist, so daß dem ersten und dem zweiten Kreislauf gereinigtes Strömungsmedium zugeführt wird.

In einer besonders günstigen Ausführungsform des erfindungsgemäßen Verfahrens erwärmt das Zwischenträgermedium Heizwasser in einem Heizwasser-Rücklauf des Heizkreises. Das Abgas beispielsweise einer Ölheizung weist eine Abgastaupunkttemperatur von ca. 50°C auf. Die Temperatur des Heizwassers im Heizwasser-Rücklauf kann so gewählt werden, daß sie genügend unterhalb dieser Abgastaupunkttemperatur liegt, beispielsweise bei ca. 35°C. Dadurch läßt sich die Restwärme des Abgases nutzen, ohne daß das Abgas selber über seine Abgastaupunkttemperatur erwärmt wird.

Besonders vorteilhaft ist es dann, wenn der Massestrom des Zwischenträgermediums im ersten Kreislauf in Abhängigkeit von der Temperatur des Heizwassers im Heizwasser-Rücklauf gesteuert wird. Dadurch kann beispielsweise bei erniedrigten Außentemperaturen, welche eine Erhöhung der Temperatur des Heizwassers im Heizwasser-Rücklauf zur Folge haben, der Massestrom des Zwischenträgermediums durch den Restwärmetauscher erhöht werden, um die Restwärme des Abgases zu nutzen.

Günstigerweise liegt die durch Nutzung der Restwärme des Abgases bewirkte Erwärmung des Zwischenträgermediums im Bereich von ungefähr 5K bis ungefähr 20K.

In einer besonders vorteilhaften Ausführungsform des erfindungsgemäßen Verfahrens ist der Massestrom des Reinigungsmediums im zweiten Kreislauf im Bereich vom ungefähr 2,8-fachen bis ungefähr 25-fachen des Massestroms des Zwischenträgermediums im ersten Kreislauf und insbesondere beim ungefähr siebenfachen des Massestroms des Zwischenträgermediums im ersten Kreislauf. Auf diese Weise wird eine optimale Reinigung des Abgases in dem Reinigungsreaktor erzielt.

Für die Wärmeaufnahme aus dem Abgas ist es besonders günstig, wenn der Restwärmetauscher ein Monodispers-Restwärmetauscher ist, so daß ein Zwischenträgermedium-Spray im Restwärmetauscher eine zur Nutzung der Restwärme des Abgases optimale TropfengröBe und Tropfenform in monodisperser Verteilung aufweist.

Insbesondere kann erreicht werden, daß die überwiegende Anzahl der Tropfen eine Mindestgröße aufweisen, so daß die Tropfen durch den Abgasstrom nicht aus dem Restwärmetauscher herausgetragen werden können.

Wenn das Abgas in Gegenrichtung zur Führungsrichtung des Zwischenträgermediums durch den Restwärmetauscher geführt wird, dann trifft im Restwärmetauscher eintretendes kaltes Zwischenträgermedium auf abströmendes gekühltes Abgas. Dadurch läßt sich die Restwärme des Abgases gemäß dem Gegenstromprinzip durch das Zwischenträgermedium optimal nutzen.

In einer Variante einer Ausführungsform ist es vorgesehen, daß das Abgas parallel zur Führungsrichtung des Zwischenträgermediums durch den Restwärmetauscher geführt wird. Dadurch kann beispielsweise verhindert werden, daß Tropfen von Zwischenträgermedium-Spray aus dem Restwärmetauscher herausgerissen werden.

Zur Erzielung eines hohen Reinigungsgrades des Abgases ist es günstig, wenn das Reinigungsmedium in Schwerkraftrichtung durch den Abgasreinigungsreaktor geführt wird. Dadurch lassen sich die Fließeigenschaften des Reinigungsmediums zur Abgasreinigung, insbesondere zur Erzielung großer Kontaktflächen zwischen dem Abgas und dem Reinigungsmedium, nutzen. Insbesondere ist es dann vorteilhaft, wenn das Abgas entgegen der Führungsrichtung des Reinigungsmediums durch den Abgasreinigungsreaktor geführt wird, um eine hohe Kontaktzeit zwischen dem Abgas und dem Reinigungsmedium zu erreichen.

In einer besonders günstigen Variante einer Ausführungsform wird das in dem Abgasreinigungsreaktor gereinigte Abgas mittels des Abgases aus der Feuerungsanlage nacherwärmt. Dadurch wird verhindert, daß das gereinigte und abgekühlte Abgas eine Durchnässung eines Schornsteins verursacht.

Der Erfindung liegt ferner die Aufgabe zugrunde, eine Vorrichtung der eingangs genannten Art derart zu verbessern, daß ein gegenüber herkömmlichen Vorrichtungen größerer Anteil der Restwärme des Abgases genutzt werden kann.

Diese Aufgabe wird erfindungsgemäß dadurch gelöst, daß das Zwischenträgermedium ein Abgaskondensat ist, daß die Vorrichtung einen Abgasreinigungsreaktor zur Reinigung des Abgases aufweist, welcher bezogen auf den Abgasstrom nach dem Restwärmetauscher angeordnet ist, daß die Vorrichtung einen ersten Kreislauf aufweist, in dem das Zwischenträgermedium durch den Restwärmetauscher zur Wärmeaufnahme durch das Abgas führbar ist, und daß die Vorrichtung einen zweiten Kreislauf aufweist, in dem ein Reinigungsmedium durch den Abgasreinigungsreaktor zur Abgasreinigung führbar ist.

Diese erfindungsgemäße Vorrichtung weist die bereits im Zusammenhang mit dem erfindungsgemäßen Verfahren diskutierten Vorteile auf. Bevorzugte Ausgestaltungen der erfindungsgemäßen Vorrichtung sind Gegenstand der Ansprüche 26 bis 59, deren Vorteile bereits im Zusammenhang mit den bevorzugten Ausgestaltungen des erfindungsgemäßen Verfahrens gemäß den Ansprüchen 2 bis 24 erläutert wurden.

Eine besonders günstige Ausführungsform der erfindungsgemäßen Vorrichtung, bei der der Abgasreinigungsreaktor einen in der Nähe seines oberen Endes angeordneten Reinigungsmedium-Verteiler aufweist, der so ausgebildet ist, daß das Reinigungsmedium auf eine bezüglich der Abgasreinigung aktive Reinigungsoberfläche verteilbar ist, weist den zusätzlichen Vorteil auf, daß eine hohe Kontaktoberfläche zwischen dem zu reinigenden Abgas und dem Abgasreinigungsmedium herstellbar ist.

Zur Erhöhung der Kontaktoberfläche und zur Erhöhung der Kontaktzeit zwischen dem Abgas und dem Reinigungsmedium ist es insbesondere vorteilhaft, wenn der Abgasreinigungsreaktor Fließelemente für das Reinigungsmedium aufweist. Die FlieBelemente stellen eine große Oberfläche bereit, auf der das Reinigungsmedium fließen kann. Dadurch wird einerseits die Kontaktfläche erhöht und andererseits wird die Fließgeschwindigkeit des Reinigungsmedium durch den Abgasreinigungsreaktor verringert.

In einer Variante einer Ausführungsform ist es vorgesehen, daß der Abgasreinigungsreaktor als Fließelemente für das Reinigungsmedium eine Mehrzahl von Böden umfaßt, welche eine Vielzahl von Öffnungen aufweisen und welche bezogen auf die Schwerkraftrichtung in einem vertikalen Abstand voneinander im Abgasreinigungsreaktor angeordnet sind. Als Böden lassen sich insbesondere Lochblechböden einsetzen, wobei das Reinigungsmedium auf den Böden fließt und durch die Öffnungen auf den nächsten, darunterliegenden Boden gelangt. Durch die Öffnungen strömt das Abgas. Die Kontaktfläche zwischen dem Reinigungsmedium und dem Abgas ist dann im wesentlichen durch die Flächen der Böden gebildet.

Zur weiteren Erhöhung der Kontaktoberfläche ist es günstig, wenn als Fließelemente für das Reinigungsmedium Raschigringe oder andere Formkörper, beispielsweise Drahtformkörper oder keramische Formkörper vorgesehen sind.

In einer konstruktiv besonders günstigen Ausführungsform bilden der Abgasreinigungsreaktor und der Restwärmetauscher eine Abgas-Wärmetausch-Einheit. Dadurch erhält die erfindungsgemäße Vorrichtung eine kompakte Bauweise. Insbesondere lassen sich Leitungsstrecken für Abgas und für Strömungsmedium verringern.

In einer Variante einer Ausführungsform einer erfindungsgemäßen Vorrichtung ist in der Abgas-Wärmetausch-Einheit der Restwärmetauscher den Abgasreinigungsreaktor umschließend angeordnet.

In einer besonders günstigen Variante ist in der Abgas-Wärmetausch-Einheit der Abgasreinigungsreaktor den Restwärmetauscher umschließend angeordnet. Dadurch läßt sich in dem Abgasreinigungsreaktor die Außenmantelfläche des Restwärmetauschers als Fließelement für das Reinigungsmedium zur Erhöhung der Kontaktoberfläche zwischen Reinigungsmedium und Abgas nutzen.

Eine konstruktiv einfache Anordnung ergibt sich, wenn in der Abgas-Wärmetausch-Einheit der Abgasreinigungsreaktor und der Restwärmetauscher koaxial angeordnet sind.

In einer Variante einer Ausführungsform ist in der Abgaswärmetausch-Einheit der Abgasreinigungsreaktor bezogen auf die Schwerkraftrichtung oberhalb des Restwärmetauschers angeordnet. Dies ergibt eine platzsparende und kompakte Bauweise.

Günstig ist es dann, wenn die Abgas-Wärmetausch-Einheit einen Ringkanal aufweist, durch welchen Abgas aus dem Restwärmetauscher dem Abgasreinigungsreaktor zuführbar ist. Dadurch kann vermieden werden, daß der Boden des Abgasreinigungsreaktors bzw. die Decke des Restwärmetauschers durchbrochen werden muß.

In einer besonders günstigen Ausführungsform einer erfindungsgemäßen Vorrichtung bildet in der Abgaswärmetausch-Einheit ein Sammelbereich des Reinigungsmediums eine Versorgungseinheit eines Zwischenträgermedium-Verteilers des Restwärmetauschers. Eine solche Anordnung weist günstige Steuerungs- und Regelungsmöglichkeiten für die Strömung an Reinigungsmedium und Zwischenträgermedium in der Vorrichtung auf. Insbesondere werden die Strömungswege, wenn die Abgas-Wärmetausch-Einheit eine Führungsstrecke des Zwischenträgermediums im ersten Kreislauf bildet, verringert, so daß die Vorrichtung optimiert werden kann.

Der Massestrom des Reinigungsmediums im zweiten Kreislauf läßt sich dadurch steuern, daß der Sammelbereich einen Austritt für Reinigungsmedium zur Führung des Reinigungsmediums im zweiten Kreislauf aufweist. Dadurch, daß der Austritt in einem definierten, bezogen auf die Schwerkraftrichtung vertikalen Abstand von dem Zwischenträgermedium-Verteiler des Restwärmetauschers angeordnet ist, läßt sich das Verhältnis des Massestroms an Reinigungsmedium in dem zweiten Kreislauf zu dem Massestrom des Zwi-Zwischenträgermediums in dem ersten Kreislauf einstellen, ohne daß eventuelle Massensteuerorgane vorgesehen werden müssen.

Eine konstruktiv besonders einfache Ausführungsform ist das Reinigungsmedium von dem Austritt durch eine Leitung zu dem Neutralisator führbar.

In einer Variante einer Ausführungsform kann es auch vorgesehen sein, daß die Vorrichtung eine Leitung aufweist, durch welche Zwischenträgermedium unter Umgehung des Neutralisators dem Abgasreinigungsreaktor zuführbar ist. Dadurch ist die erfindungsgemäße Vorrichtung auf vereinfachte Weise realisierbar.

Weiter liegt der vorliegenden Erfindung die Aufgabe zugrunde, eine Abgas-Wärmetausch-Einheit der eingangs genannten Art zu schaffen, durch die eine optimale Reinigung des Abgases bei effektiver Nutzung der Restwärme des Abgases erreicht ist.

Diese Aufgabe wird bei der eingangs genannten Abgas-Wärmetausch-Einheit erfindungsgemäß dadurch gelöst, daß die Abgas-Wärmetausch-Einheit einen Abgasreinigungsreaktor zur Reinigung des Abgases mittels eines Reinigungsmediums und einen Restwärmetauscher zur Aufnahme von Wärme durch das Zwischenträgermedium aus dem Abgas umfaßt und daß der Abgasreinigungsreaktor bezogen auf die Schwerkraftrichtung oberhalb eines Zwischenträgermedium-Verteilers des Restwärmetauschers angeordnet ist.

Dieses erfindungsgemäße Konzept bietet den bereits im Zusammenhang mit dem erfindungsgemäßen Verfahren und der erfindungsgemäßen Vorrichtung erörterten Vorteile.

Weitere vorteilhafte Ausführungsformen der erfindungsgemäßen Abgas-Wärmetausch-Einheit sind Gegenstand der Ansprüche 61 bis 73. Diese Ausführungsformen weisen die im Zusammenhang mit dem erfindungsgemäßen Verfahren und der erfindungsgemäßen Vorrichtung bereits erörterten Vorteile auf.

Weitere Merkmale und Vorteile der Erfindung sind Gegenstand der nachfolgenden Beschreibung und zeichnerischen Darstellung von Ausführungsbeispielen:

In der Zeichnung zeigen:
- Fig. 1: ein erstes Ausführungsbeispiel einer erfindungsgemäßen Vorrichtung;
- Fig. 2: ein zweites Ausführungsbeispiel einer erfindungsgemäßen Vorrichtung;
- Fig. 3: einen Querschnitt AA (Fig. 1) durch einen Abgasreinigungsreaktor;
- Fig. 4: ein erstes Ausführungsbeispiel einer Abgas-WärmetauschEinheit;
- Fig. 5: ein zweites Ausführungsbeispiel einer Abgas-Wärmetausch-Einheit;

- Fig. 6: ein drittes Ausführungsbeispiel einer AbgasWärmetausch-Einheit;
- Fig. 7: ein viertes Ausführungsbeispiel einer AbgasWärmetausch-Einheit;
- Fig. 8: eine erste Variante einer Ausführungsform der erfindungsgemäßen Vorrichtung mit der AbgasWärmetausch-Einheit gemäß des vierten Ausführungsbeispiels;
- Fig. 9: eine zweite Ausführungsform der erfindungsgemäßen Vorrichtung mit der erfindungsgemäßen Abgas-Wärmetausch-Einheit gemäß des vierten Ausführungsbeispiels,
- Fig. 10a: ein erstes Ausführungsbeispiel eines Raschigrings;
- Fig. l0b: ein zweites Ausführungsbeispiel eines Raschigrings in schematischer Darstellung und
- Fig. 11: eine Variante einer Ausführungsform mit einer Pumpe mit zwei Ausgängen.

Gleiche oder funktional äquivalente Elemente sind in allen Figuren mit denselben Bezugszeichen bezeichnet.

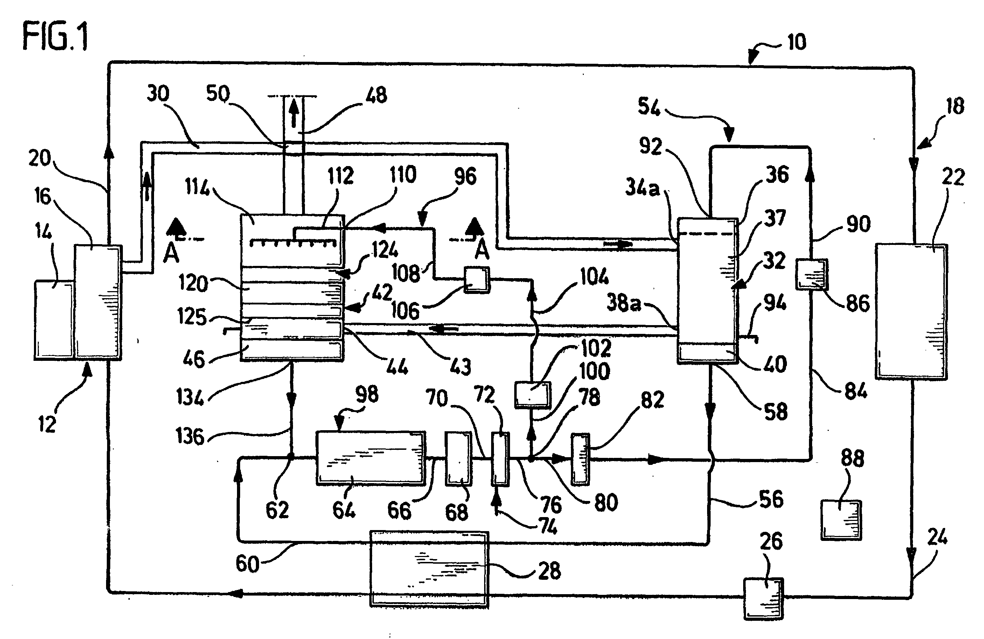

Ein erstes Ausführungsbeispiel einer erfindungsgemäßen Vorrichtung zur Nutzung der Restwärme, welche die restliche fühlbare und die latente Wärme umfaßt, eines Abgases einer Feuerungsanlage 12 ist in Fig. 1 schematisch dargestellt und als Ganzes mit 10 bezeichnet. Die Feuerungsanlage umfaßt einen Brenner 14 und einen Heizkessel 16, in dem Heizwasser durch den Brenner 14 aufgeheizt wird. Der Brenner 14 wird mit fossilen Brennstoffen, insbesondere Öl, betrieben.

Das Heizwasser strömt in einem Heizkreis, welcher in Fig. 1 als Ganzes mit 18 bezeichnet ist. Das im Heizkessel 16 erhitzte Heizwasser strömt in einem Heizwasser-Vorlauf 20 zu einer Heizkörperanordnung 22, durch die das Heizwasser Wärme beispielsweise an zu beheizende Räume abgibt. Von der Heizkörperanordnung 22 strömt das Heizwasser in einem Heizwasser-Rücklauf 24 dem Heizkessel 16 zu, so daß der Heizkreis 18 geschlossen ist.

Im Heizwasser-Rücklauf 24 ist ein Temperaturfühler 26 angeordnet, der die Temperatur des Heizwassers im Heizwasser-Rücklauf 24 ermittelt. In einem Zwischenträgermedium-Heizwasser-Wärmetauscher 28, welcher bezogen auf die Strömungsrichtung des Heizwassers im Heizkreis 18 nach dem Temperaturfühler 26 angeordnet ist, kann das Heizwasser im Heizwasser-Rücklauf 24 Wärme von einem Zwischenträgermedium aufnehmen.

Von einem Feuerraum der Feuerungsanlage 12 führt eine Abgasleitung 30 für bei der Verbrennung entstandenem Abgas zu einem Restwärmetauscher 32.

Bei dem Restwärmetauscher handelt es sich insbesondere um einen Monodispers-Restwärmetauscher. Ein solcher Monodispers-Restwärmetauscher ist in der nicht vorveröffentlichten deutschen Patentanmeldung mit dem Aktenzeichen 195 43 452.8-16 der gleichen Anmelderin und in der nicht vorveröffentlichten deutschen Patentanmeldung mit dem Aktenzeichen 195 43 449.8-16 der gleichen Anmelderin beschrieben. Auf diese beiden Anmeldungen wird hier ausdrücklich Bezug genommen.

Die Abgasleitung 30 mündet an einem Eintritt 34a in den Restwärmetauscher 32. Bei der in Fig. 1 gezeigten Variante eines Ausführungsbeispieles ist der Eintritt 34a bezogen auf die Schwerkraftrichtung in einem oberen Bereich des Restwärmetauschers 32 und unterhalb eines Verteilers 36 für Zwischenträgermedium angeordnet, so daß das Abgas und das Zwischenträgermedium in einem Wärmetauschraum 37 des Restwärmetauschers 32 parallel geführt sind.

Der Restwärmetauscher 32 weist an seinem unteren Ende einen Austritt 38a auf, welcher oberhalb eines Sumpfes 40 für Zwischenträgermedium angeordnet ist. Von dem Austritt 38a führt eine Abgasleitung 43 zu einem Abgasreinigungsreaktor 42.

Der Abgasreinigungsreaktor weist in einem unteren Bereich einen Eintritt 44 für Abgas auf. Dieser Eintritt ist oberhalb eines Sumpfes 46 für Reinigungsmedium angeordnet.

Abgas, welche den Abgasreinigungsreaktor 42 durchströmt, wird in einem oberen Bereich des Abgasreinigungsreaktors mittels einer Abführungsleitung 48 abgeführt. Die Abführungsleitung 48 ist beispielsweise mit einem Schornstein (in der Fig. nicht gezeigt) verbunden.

Die Abführungsleitung 48 weist einen Temperaturwechsler 50 auf, welcher in der Abgasleitung 30 angeordnet ist. Durch diesen Temperaturwechsler 50 kann den Abgasreinigungsreaktor 42 verlassendes gereinigtes Abgas mittels von der Feuerungsanlage 12 kommendem Abgas nacherwärmt werden, um ein Durchnässen des Schornsteins durch das Abgas zu vermeiden.

Das Zwischenträgermedium, welches in dem Wärmetauschraum 37 des Restwärmetauschers 32 Wärme aus dem Abgas aufnimmt und dieses in dem Zwischenträgermedium-Heizwasser-Wärmetauscher 28 an Heizwasser im Heizwasser-Rücklauf 24 abführt, ist in einem ersten Kreislauf 54 geführt.

Dieser erste Kreislauf 54 umfaßt eine Leitung 56, durch die Zwischenträgermedium mittels eines Austritts 58 aus dem Sumpf 40 des Restwärmetauschers 32 zu einem Eingang des Zwischenträgermedium-Heizwasser-Wärmetauschers 28 strömt. Von einem Ausgang dieses Zwischenträgermedium-Heizwasser-Wärmetauschers 28 strömt das Zwischenträgermedium über eine Leitung 60 zu einem ersten Eingang einer Zusammenführung 62. Ein Ausgang dieser Zusammenführung 62 ist mit einem Neutralisator 64 verbunden, der der Neutralisierung saurer Strömungsmedium-Komponenten dient und zu diesem Zweck beispielsweise mit Hydrolit gefüllt ist, welches einen MgO-Gehalt von ungefähr 75 % aufweist und als weitere Bestandteile Wasser, Kohlendioxid sowie Spuren von Kalzium-, Eisen-, Aluminium- und Siliziumoxid umfaßt.

Von dem Neutralisator 64 führt eine weitere Leitung 66 zu einem Filter 68, welches eine Maschenweite von beispielsweise weniger als 100 µm aufweist und zum Ausfiltern von Festkörperbestandteilen aus dem Strömungsmedium dient.

Das Filter 68 kann auch in den Neutralisator 64 integriert sein, wobei dann die Leitung 66 entfällt.

Von dem Filter 68 führt eine weitere Leitung 70 zu einem Luftinjektor 72. Dieser dient der Oxidation von in dem Strömungsmedium gelösten Sulfit-Ionen zu ungiftigen SulfatIonen mittels Luft, die dem Luftinjektor 72 über eine an diesem angeschlossene Luftzuführleitung 74 zugeführt wird.

Der Luftinjektor 72 ist innerhalb des ersten Kreislaufs 54 für das Zwischenträgermedium in Strömungsrichtung hinter dem Neutralisator 64 angeordnet, um eine Luftsiphonbildung im Neutralisator 64 durch in dem Luftinjektor 72 injizierte Oxidationsluft zu vermeiden.

Vom Luftinjektor 72 führt eine weitere Leitung 76 zu einem Eingang einer Abzweigung 78. Von einem ersten Ausgang dieser Abzweigung 78 führt eine Leitung 80 zu einem saugseitigen Eingang einer Zwischenträgermedium-Pumpe 82, welche der Beförderung des Zwischenträgermediums im ersten Kreislauf 54 dient.

Von einem druckseitigen Ausgang der Zwischenträgermedium-Pumpe 82 führt eine weitere Leitung 84 zu einem Eingang eines Massestrom-Steuerorgans 86. Dieses dient dazu, den Massestrom an Zwischenträgermedium im ersten Kreislauf 54 zu steuern. Dazu ist das Massestrom-Steuerorgan 86 mit einer Steuerungsund Regelungseinheit 88 verbunden (die Verbindung ist in der Fig. nicht gezeigt).

Von einem Ausgang des Massestrom-Steuerorgans 86 führt eine weitere Leitung 90 zu einem Eintritt 92 für Zwischenträgermedium in den Restwärmetauscher 32. Dadurch wird das Zwischenträgermedium dem Verteiler 36 zugeführt, der insbesondere als Düsenplatte ausgebildet sein kann, so daß das Zwischenträgermedium den Restwärmetauscher 32 durchströmt und aus dem Abgasstrom, welcher durch den Restwärmetauscher 32 strömt, im Wärmetauschraum 37 fühlbare und latente Wärme aufnimmt. Dieses erwärmte Zwischenträgermedium sammelt sich im Sumpf 40 an und wird mittels des Austritts 58 abgeführt.

Im Bereich des Sumpfes 40 weist der Restwärmetauscher 32 einen Überlauf 94 für Zwischenträgermedium auf.

Ein Reinigungsmedium, welches aus dem gleichen Medium gebildet ist wie das Zwischenträgermedium, strömt in einem zweiten Kreislauf 96. Der zweite Kreislauf 96 umfaßt einen Führungsabschnitt 98, welcher aus der Verbindung zwischen dem Ausgang der Zusammenführung 62 und dem Neutralisator 64, der Leitung 66, dem Filter 68, der Leitung 70, dem Luftinjektor 72 und der Leitung 76 gebildet ist. Der Führungsabschnitt 98 ist dem ersten Kreislauf 54 für das Zwischenträgermedium und dem zweiten Kreislauf 96 für das Reinigungsmedium gemeinsam, so daß das Strömungsmedium, welches den Führungsabschnitt 98 durchströmt und dessen saure Strömungsmedium-Komponenten dort neutralisiert werden, durch eine Zusammenführung von Zwischenträgermedium und Reinigungsmedium gebildet ist.

Von einem zweiten Ausgang der Zusammenführung 78 führt eine Leitung 100 zu einem saugseitigen Eingang einer Pumpe 102, durch welche das Reinigungsmedium im zweiten Kreislauf 96 befördert wird. Von einem druckseitigen Ausgang der Pumpe 102 führt eine Leitung 104 zu einem Eingang eines Massestrom-Steuerorgans 106, welches zur Steuerung des Massestroms an Reinigungsmedium durch den zweiten Kreislauf 96 dient. Von einem Ausgang des Massestrom-Steuerorgans 106 führt eine Leitung 108 zu dem Abgasreinigungsreaktor 42 und mündet über einen Eintritt 110 in einen oberen Bereich des Abgasreinigungsreaktors 42. Das Massestrom-Steuerorgan 106 ist mit der Steuerungs- und Regelungseinheit 88 verbunden, welche den Massestrom des Reinigungsmediums im zweiten Kreislauf 96 steuert.

Von dem Eintritt 110 führt eine Leitung 112 im Abgasreinigungsreaktor 42 zu einem Verteiler 114, welcher in der Nähe eines oberen Endes des Abgasreinigungsreaktors 42 angeordnet ist. Der Verteiler 114 dient zur Feinverteilung und insbesondere zur Tropfendispergierung des Reinigungsmediums, um eine große Kontaktoberfläche zwischen dem Reinigungsmedium und dem den Abgasreinigungsreaktor 42 durchströmenden und zu reinigenden Abgas zu ermöglichen.

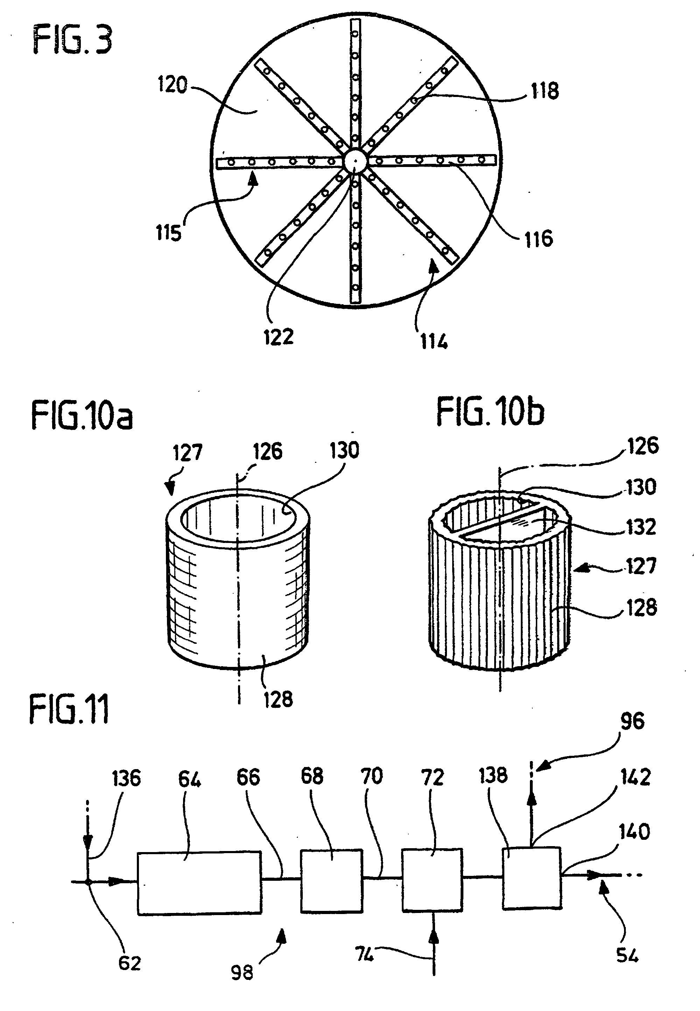

In einer Variante einer Ausführungsform ist, wie in Fig. 3 dargestellt, der Verteiler 114 durch ein Verteilerkreuz 115 gebildet. Das Verteilerkreuz 115 umfaßt mehrere Arme 116, die in einem Winkel zueinander angeordnet sind, beispielsweise acht Arme, die in einem Winkel von 45° zueinander angeordnet sind. Jeder Arm weist Öffnungen 118 auf, durch die Reinigungsmedium in einen Reinigungsraum 120 des Abgasreinigungsreaktors 42 sprühbar ist. Die Arme 116 dienen dabei als Zuführungsleitungen für die Öffnungen 118.

Die Arme 116 schneiden sich in einem Zentrum 122, welches insbesondere auf einer Achse des Abgasreinigungsreaktors 42 liegt. Dieses Zentrum 122 ist mit der Leitung 112 für Reinigungsmedium verbunden, so daß durch diese den Armen 116 Reinigungsmedium zuströmbar ist.

Im Reinigungsraum 120 des Abgasreinigungsreaktors 42 sind Fließelemente 124 angeordnet, die dazu dienen, die Kontaktfläche zwischen zu reinigendem Abgas und dem Reinigungsmedium zu vergrößern und die Kontaktzeit für den Stoffaustausch zwischen Abgas und flüssigem Reinigungsmedium zu erhöhen.

In einer Variante einer Ausführungsform (Fig. 1) sind die Fließelemente 124 durch Böden 125 gebildet, welche im Reinigungsraum 120 in einem vertikalen Abstand voneinander angeordnet sind und Öffnungen aufweisen, durch die Abgas durch die Böden 125 durch den Reinigungsraum 120 des Abgasreinigungsreaktors strömen kann.

In einer weiteren Variante einer Ausführungsform sind die Fließelemente 124 durch Zylinder gebildet, die mit Raschigringen 127 (Fig. 10a, 10b) gefüllt sind, wobei eine Zylinderachse 126 der Raschigringe 124, welche im Reinigungsraum 120 angeordnet sind, parallel zu der Achse des Abgasreinigungsreaktors 42 ausgerichtet sind.

Die Raschigringe weisen einen äußeren Zylindermantel 128 und eine Innenfläche 130 auf. Es kann auch vorgesehen sein, daß im Innern eines Raschigrings (Fig. 10b) eine oder mehrere Innenwände 132 zur weiteren Vergrößerung der Innenfläche 130 diametral angeordnet sind.

Die Raschigringe 127 dienen dazu, die Kontaktoberfläche zwischen dem über die Raschigringe 127 fließenden Reinigungsmedium und dem durch oder über Zwischenräume der Raschigringe 127 strömenden Abgas zu vergrößern.

Es kann auch vorgesehen sein, daß in dem Reinigungsraum 120 des Abgasreinigungsreaktors 42 Drahtformkörper oder keramische Formkörper zur Vergrößerung der Kontaktoberfläche und zur Erhöhung der Kontaktzeit zwischen Abgas und Reinigungsmedium angeordnet sind.

In einem unteren Bereich des Abgasreinigungsreaktors 42 ist der Sumpf 46 für flüssiges Reinigungsmedium. Über einen Austritt 134 und eine Leitung 136 ist der Abgasreinigungsreaktor 42 mit einem zweiten Eingang der Zusammenführung 62 verbunden, so daß Reinigungsmedium aus dem Abgasreinigungsreaktor 42 in den Führungsabschnitt 98 strömen kann, wo es sich mit dem Zwischenträgermedium aus der Leitung 60 vermischt und in dem Neutralisator 64 neutralisiert wird.

Die vorstehend beschriebene erste Ausführungsform der erfindungsgemäßen Vorrichtung 10 arbeitet wie folgt:

Heizwasser, welches in dem Heizkessel 16 erwärmt wird, gelangt mittels des Heizwasser-Vorlaufs 20 in die Heizkörperanordnung 22 und gibt beim Durchlaufen der Heizkörperanordnung 22 Wärme ab. Durch den Heizwasser-Rücklauf 24 kehrt das Heizwasser über den Zwischenträgermedium-Heizwasser-Wärmetauscher 28 zum Heizkessel 16 zurück, wobei es in dem Zwischenträgermedium-Heizwasser-Wärmetauscher 28 Wärme aus dem Zwischenträgermedium aufnimmt.

Der Temperaturfühler 26 ermittelt zur Steuerung des Massestroms des Zwischenträgermediums im ersten Kreislauf 54 die Temperatur des Heizwassers im Heizwasser-Rücklauf 24 und meldet diesen Temperaturwert der Steuerungs- und Regelungseinheit 88.

Während Betriebsphasen des Brenners 14 der Feuerungsanlage 12 entsteht durch Verbrennung des Brennstoffes, insbesondere Öl oder Kohle, im Brenner 14 ein Abgas, das durch die Abgasleitung 30 zum Restwärmetauscher 32 strömt.

Die Strömungsrichtung des Abgases ist in Fig. 1 mit Pfeilen angegeben.

Das Zwischenträgermedium im ersten Kreislauf 54 wird unter einem geringen Überdruck, der beispielsweise in der Größenordnung von 1 mbar oder darüber liegt, durch den Verteiler 36, welcher insbesondere als Düsenplatte ausgebildet ist, in den Wärmetauschraum 37 des Restwärmetauschers 32 geführt.

Aus Düsenbohrungen der Düsenplatte tritt ein frei durch den Wärmetauschraum 37 fallender Zwischenträgermediumstrahl aus, der nach Durchfallen eine Zerfallslänge in die Tropfen eines Zwischenträgermediumsprays zerfällt.

Beim erfindungsgemäßen Verfahren ist die Zerfallslänge gegenüber bekannten Verfahren verlängerbar, da der Massestrom durch den Restwärmetauscher geringer ist. Dadurch wird die Verweilzeit des Zwischenträgermediums im Restwärmetauscher erhöht.

Unmittelbar nach Eintritt des heißen Abgases aus der Abgasleitung 30 in den Restwärmetauscher 32 kommt das Abgas in Kontakt mit den Tropfen des monodispersen Zwischenträgermediumsprays und Wasser aus dem Abgas schlägt sich an den Tropfen des Zwischenträgermediums nieder. Dabei wird fühlbare und latente Wärme gewonnen. Ein Teil des Niederschlags findet auch am nicht zerfallenen Zwischenträgermediumstrahl statt.

Die gebildeten Wassertropfen strömen zusammen mit dem abgekühlten Abgas in Fallrichtung des Kondensatsprays im Wärmetauschraum 37 nach unten, wobei sich das Abgas weiter abkühlt. Die Temperatur des Zwischenträgermediums erhöht sich beim Durchlaufen des Restwärmetauschers in einem Bereich zwischen ca. 5K und 20K.

Im Zwischenträgermedium-Heizwasser-Wärmetauscher 28 gibt das Zwischenträgermedium die aufgenommene Wärme nahezu vollständig an das Heizwasser im Heizwasserrücklauf 24 ab, da das erfindungsgemäße Verfahren für einen optimalen Übertragungswirkungsgrad sorgt. Die Steuerungs- und Regelungseinheit 88 steuert dabei über das Massestrom-Steuerorgan 86 den Massestrom des Zwischenträgermediums in dem ersten Kreislauf 54.

In dem Führungsabschnitt 98 wird das Zwischenträgermedium neutralisiert und gereinigt, wodurch gleichzeitig teilweise eine Reinigung das den Restwärmetauscher durchströmenden Abgases erfolgt. Der wesentliche Reinigungsschritt für das Abgas erfolgt bei Durchlaufen des Abgasreinigungsreaktors 42.

Das Abgas, das den Restwärmetauscher 32 durchströmt hat, wird dem Abgasreinigungsreaktor 42 zugeführt und in welchen es über den Eintritt 44 in einem unteren Bereich eintritt. Das zu reinigende Abgas strömt entgegen der Schwerkraftrichtung und entgegen der Fließrichtung des Reinigungsmediums nach oben, wobei es in Kontakt mit dem Reinigungsmedium gebracht wird.

Das Reinigungsmedium wird im Abgasreinigungsreaktor 42 mittels des Verteilers 114 in Tropfen dispergiert und strömt über die Fließelemente 124 durch den Reinigungsraum 120 des Abgasreinigungsreaktors 42.

Das Reinigungsmedium wäscht dabei im Abgas gelöste Verunreinigungen, insbesondere Schwefeldioxid aus. Das Reinigungsmedium mit den ausgewaschenen Verunreinigungen sammelt sich in dem Kondensatsumpf 46 und wird von dort dem Führungsabschnitt 98 zugeführt. In dem Neutralisator 64 wird durch Zugabe von Neutralisationsmitteln (beispielsweise Hydrolit) ein pH-Wert des Strömungsmediums, welches durch die Zusammenführung von Zwischenträgermedium aus dem ersten Kreislauf 54 und von Reinigungsmedium aus dem zweiten Kreislauf 96 entstanden ist, zwischen ungefähr 6 und ungefähr 7 eingestellt.

Dies ist insbesondere bei der Verwendung von schwefelhaltigen Brennstoffen im Brenner 14 von Vorteil, da das heiße Abgas in diesem Falle SO₂ enthält, das sich im Reinigungsmedium bzw. Zwischenträgermedium löst und dieses sauer und äußerst korrosiv macht. Saures Zwischenträgermedium würde den Restwärmetauscher 32 und die übrigen Bestandteile des ersten Kreislaufes 54 korrodieren und überdies von metallischen Spurenelementen herrührende Metalloxidkomponenten aus dem Abgas lösen, was zu einer hohen Metallkonzentration im Kondensat und zu einer Zerstörung des Restwärmetauschers 32 führen könnte.

Das neutralisierte Strömungsmedium wird im Kondensatfilter 68 gefiltert und gelangt in den Luftinjektor 72, wo ihm durch die Luftzuführleitung 74 ein Luftstrom zugeführt wird, durch den gegebenenfalls im Kondensat gelöste Sulfitionen zu ungiftigen Sulfationen oxidiert werden. Eine Luftzuführung ist insbesondere erforderlich, wenn die Luftzahl der Verbrennung im Brenner 14 nahe bei dem stöchiometrischen Wert liegt. Liegt dies nicht vor, dann kann auf eine Luftinjektion verzichtet werden, da zur Oxidation der Metallsulfitkomponenten noch genügend Sauerstoff im Abgas ist.

An der Abzweigung 78 wird das Strömungsmedium getrennt in das Zwischenträgermedium, das in dem ersten Kreis 54 strömt und in das Reinigungsmedium, das im zweiten Kreislauf 96 strömt.

Die Steuerungs- und Regelungseinheit 88 regelt dabei den Massestrom des Reinigungsmediums im zweiten Kreislauf 96 so, daß er in einem Bereich zwischen dem etwa 2,8-fachen und dem etwa 25-fachen des Massestroms des Zwischenträgermediums im ersten Kreislauf 54 liegt. Vorzugsweise liegt dabei der Massestrom des Reinigungsmediums im zweiten Kreislauf 96 beim etwa siebenfachen des Massestroms des Zwischenträgermediums im ersten Kreislauf 54. Solche Massestromverhältnisse gewährleisten, daß eine optimale Reinigung und Entschwefelung des Abgases erreicht wird, wobei die Entschwefelungsraten bei dem erfindungsgemäßen Verfahren 99% und mehr betragen können, und daß andererseits eine optimale Wärmeaufnahme des Zwischenträgermediums aus dem Abgas erfolgt.

Die Temperaturspreizung des Zwischenträgermediums im Restwärmetauscher liegt im Größenbereich zwischen etwa 5 K bis 20 K und bei den so gewählten Masseverhältnissen liegt die Temperaturspreizung zwischen Eintritt und Austritt des Abgases in dem Abgasreinigungsreaktor kleiner als etwa 0,1 K. Dadurch ergibt sich ein Verhältnis der Temperaturspreizungen des Zwischenträgermediums im Restwärmetauscher 32 beim Eintritt und Austritt zu derjenigen der Temperaturspreizung des Abgases im Abgasreinigungsreaktor 42 im Bereich zwischen ca. 2000 und ca. 25000.

Das mittels der Abführungsleitung 48 aus dem Abgasreinigungsreaktor 42 abgeführte und gereinigte Abgas wird über den Temperaturwechsler 50 mit heißem Abgas in der Abgasleitung 30 nacherwärmt, um ein Durchnässen des Schornsteins zu vermeiden.

In einer Variante einer erfindungsgemäßen Ausführungsform werden zur Abscheidung von Restwasser aus dem Abgas Drahtsiebe eingesetzt (in der Fig. nicht gezeigt), die in der Abführungsleitung 48 angeordnet sind.

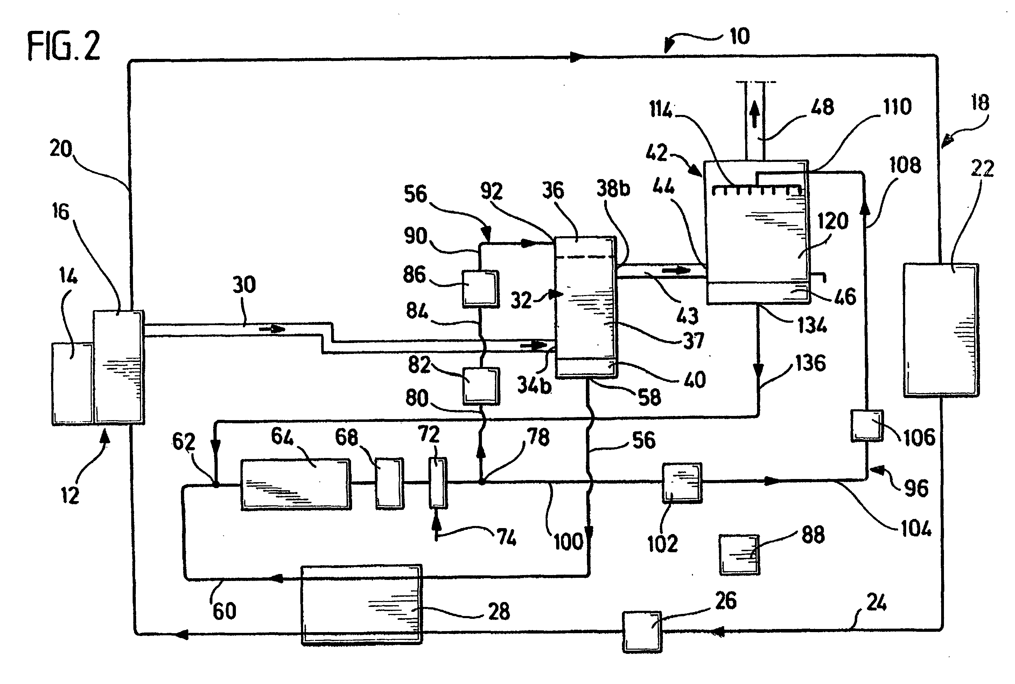

In einem zweiten Ausführungsbeispiel der erfindungsgemäßen Vorrichtung, welches in Fig. 2 in schematischer Darstellung gezeigt ist, führt die Abgasleitung 30 von der Feuerungsanlage 12 über einen Eintritt 34b in einen unteren Bereich des Restwärmetauschers 32 und über einen Austritt 38b führt die Abgasleitung 43 aus einem oberen Bereich des Restwärmetauschers 32 in den Abgasreinigungsreaktor 42. Im übrigen ist die Anordnung der einzelnen Komponenten der Vorrichtung wie bereits oben beschrieben.

Bei der in Fig. 2 gezeigten Variante ist erfindungsgemäß kein Temperaturwechsler zwischen der Abgasleitung 30 für Abgas aus der Feuerungsanlage 12 und zwischen der Abführungsleitung 48 für gereinigtes Abgas vorgesehen.

Bei dem in Fig. 2 gezeigten Beispiel einer Ausführungsform erfolgt die Wärmeaufnahme durch das Zwischenträgermedium aus dem Abgas in dem Restwärmetauscher 32 folgendermaßen:

Das Zwischenträgermedium wird unter einem geringen Überdruck durch die Düsenbohrungen des Verteilers 36 in den Wärmetauschraum 37 geführt.

Aus jeder der Düsenbohrungen tritt ein frei durch den Wärmetauschraum 37 fallender Kondensatstrahl aus, der nach Durchfallen einer Zerfallslänge in die Tropfen eines Zwischenträgermediumsprays zerfällt.

Der Abgasstrom wird in entgegengesetzter Richtung zum Zwischenträgermediumstrom durch den Restwärmetauscher 32 geführt. Unmittelbar nach Eintritt des heißen Abgases aus der Abgasleitung 30 durch den Eintritt 34b in einen knapp oberhalb des Sumpfes 40 liegenden Bereiches kommt das Abgas im Wärmetauschraum 37 mit den Tropfen des monodispersen Zwischenträgermediumsprays in Kontakt. Dabei schlägt sich Wasser aus dem Abgas an den Tropfen nieder und es wird latente und fühlbare Wärme gewonnen.

Das abgekühlte Abgas mit dem darin noch enthaltenen Wasserdampf strömt gegen die Fallrichtung des Zwischenträgermediumsprays im Wärmetauschraum 37 nach oben, wobei sich das Abgas weiter abkühlt, so daß im oberen, dem Verteiler 36 benachbarten Bereich des Wärmetauschraums 37 der im Abgas mitgeführte Wasserdampf an den Tropfen des Zwischenträgermediumsprays oder am Zwischenträgermediumstrahl kondensiert, wobei der im ersten Kreislauf 54 zirkulierende Zwischenträgermedium-Massestrom die im Dampf enthaltene latente Wärme aufnimmt.

Die Menge des im oberen Bereich des Wärmetauschraumes 37 kondensierenden Wasserdampf ist größer als die Menge des im unteren Bereich des Wärmetauschraums 37 verdampften Kondensats, so daß im Ergebnis der mit dem Abgas in dem Restwärmetauscher 32 gelangte Wasserdampf zumindest teilweise kondensiert und dabei latente Wärme an den Zwischenträgermedium-Massestrom im ersten Kreislauf 54 abgibt.

Die durchschnittliche Tropfengröße des monodispersen Zwischenträgermediumsprays ist in Abhängigkeit von der Strömungsgeschwindigkeit des Abgases im Wärmetauschraum 37 dabei so gewählt, daß die Tropfen nicht durch den Abgasstrom aus dem Wärmetauschraum 37 durch den Abgasaustritt 38b mitgerissen werden.

Das Abgas wird von dem Austritt 38b dem Restwärmetauscher 42 zugeführt.

Ansonsten funktioniert die erfindungsgemäße Vorrichtung gemäß dem zweiten Ausführungsbeispiel wie oben für das erste Ausführungsbeispiel beschrieben.

In einer Variante des ersten und des zweiten Ausführungsbeispiels ist es vorgesehen, daß in dem Führungsabschnitt 98 eine Pumpe 138 mit einem ersten Ausgang 140 und einem zweiten Ausgang 142 angeordnet ist (Fig. 11).

Durch eine solche Pumpe 138 kann auf die Pumpe 82 für das Zwischenträgermedium im ersten Kreislauf 54 und die Pumpe 102 für das Reinigungsmedium im zweiten Kreislauf 96 verzichtet werden.

Bei der Pumpe 138 handelt es sich insbesondere um eine zweistufige Pumpe.

Erfindungsgemäß kann es auch vorgesehen sein (in der Fig. nicht gezeigt), daß die Pumpe 138 ein Niederdruck-Booster aufweist, wobei der kleinere Massestrom des Zwischenträgermediums im ersten Kreislauf 54 auf einem höheren Druckniveau liegt und den größeren Massestrom des Reinigungsmediums im zweiten Kreislauf 96 bis auf eine Höhe des Verteilers 114 des Abgasreinigungsreaktors 42 ansaugt, und der Massestrom des Reinigungsmediums dann unter Schwerkraftwirkung durch den Abgasreinigungsreaktor 42 strömt.

Ansonsten arbeitet diese Variante des ersten und des zweiten Ausführungsbeispiels der erfindungsgemäßen Vorrichtung wie bereits oben beschrieben.

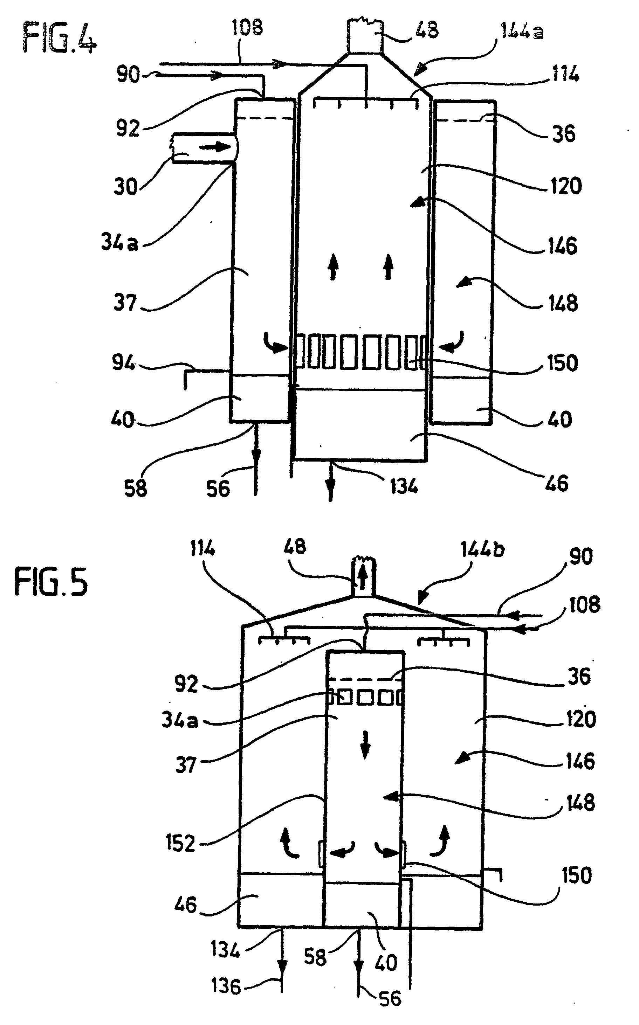

In einer Variante einer Ausführungsform der erfindungsgemäßen Vorrichtung ist es vorgesehen, daß diese eine Abgas-Wärmetausch-Einheit, welche in den Fig. 4 bis 7 mit 144a bis 144 d bezeichnet ist, aufweist, die einen Abgasreinigungsreaktor 146 und einen Restwärmetauscher 148 umfaßt.

In einem ersten Ausführungsbeispiel einer Abgas-Wärmetausch-Einheit 144, welche in Fig. 4 in schematischer Darstellung gezeigt ist, ist der Restwärmetauscher 148 koaxial zu dem Abgasreinigungsreaktor 146 um diesen angeordnet.

Der Abgasreinigungsreaktor 146 und der Restwärmetauscher 148 ist dabei jeweils so aufgebaut und arbeitet so, wie oben beschrieben. Durch die Anordnung in einer Abgas-Wärmetausch-Einheit 144a ergibt sich jedoch eine kompakte Bauweise, da insbesondere auf die Abgasleitung 43 verzichtet werden kann.

Bei dem in Fig. 4 gezeigten ersten Ausführungsbeispieles einer Abgas-Wärmetausch-Einheit 144a durchströmt das Abgas den Restwärmetauscher in Schwerkraftrichtung. In einem unteren Bereich weist der Restwärmetauscher 148 über einen inneren Umfang gleichmäßig in einem Bogenabstand angeordnete Schlitze 150 auf, durch die im Restwärmetauscher 148 abgekühltes Abgas in den Abgasreinigungsreaktor 146 strömen kann. Das Abgas durchläuft dann in Gegenrichtung zur Strömungsrichtung des Reinigungsmediums, welches über die Leitung dem Verteiler 114 zugeführt wird, den Abgasreinigungsreaktor 146, um aus dem Abgas bei der Verbrennung entstandene Verunreinigungen und insbesondere Schwefeldioxid auszuwaschen.

Der Abgasreinigungsreaktor 146 weist dabei Fließelemente 124 auf, um die Kontaktoberfläche zwischen dem Abgas und dem Reinigungsmedium und die Kontaktzeit zwischen dem Abgas und dem Reinigungsmedium zu erhöhen.

Die erfindungsgemäße Vorrichtung, die eine Abgas-Wärmetausch-Einheit 144a umfaßt, arbeitet wie oben beschrieben.

Erfindungsgemäß kann es auch vorgesehen sein, daß der Abgasreinigungsreaktor 146 koaxial zu dem Restwärmetauscher um diesen angeordnet ist (Fig. 5). Dies hat den Vorteil, daß die Fläche für den Kontakt zwischen dem Abgas und dem Reinigungsmedium durch einen Ringmantel 152 des Restwärmetauschers 148 vergrößert wird.

Bei diesem zweiten Ausführungsbeispiel einer Abgas-Wärmetausch-Einheit 144b (Fig. 5) sind ein oder mehrere Eintritte 34a für das von der Feuerungsanlage 12 kommende Abgas in einem oberen Bereich des Restwärmetauschers 148 angeordnet, so daß das Abgas in dem Wärmetauschraum 37 des Restwärmetauschers 148 parallel zur Strömungsrichtung des Zwischenträgermediumsprays strömt.

Die erfindungsgemäße Abgas-Wärmetausch-Einheit 144b gemäß dem zweiten Ausführungsbeispiel arbeitet bezüglich ihres Restwärmetauschers 148 und ihrem Abgasreinigungsreaktor 146 wie oben beschrieben.

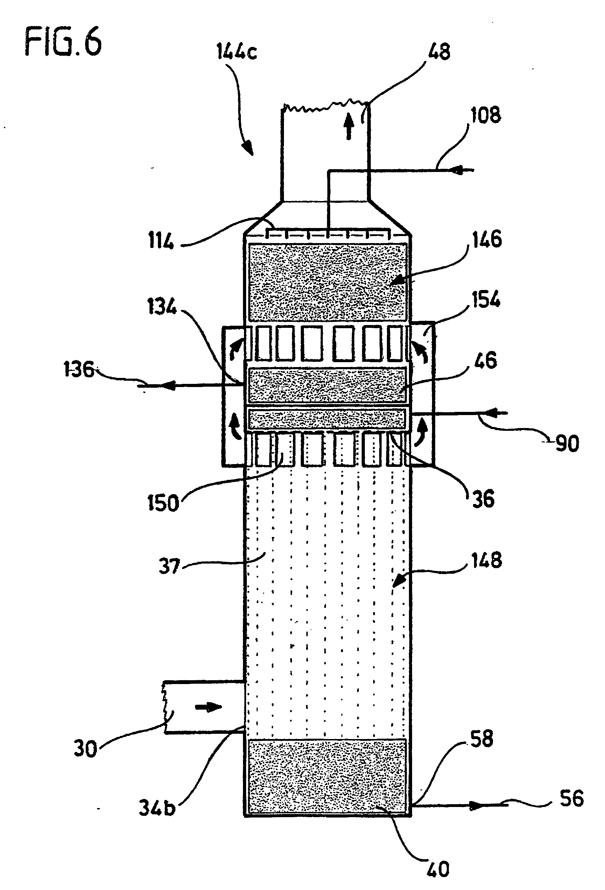

In einem dritten Ausführungsbeispiel einer erfindungsgemäßen Abgas-Wärmetausch-Einheit 144c (Fig. 6) ist der Abgasreinigungsreaktor 146 bezogen auf die Schwerkraftrichtung oberhalb des Restwärmetauschers 148 angeordnet. Die Abgasleitung 30 mündet über den Eintritt 34b in einen unteren Bereich des Restwärmetauschers 148, so daß das Abgas im Restwärmetauscher 148 in Gegenrichtung zu dem Zwischenträgermediumspray strömt.

An einem oberen Ende weist der Restwärmetauscher Schlitze 150 auf, durch die Abgas über einen Ringkanal 154 in den Abgasreinigungsreaktor 126 führbar ist.

Diese erfindungsgemäße Abgas-Wärmetausch-Einheit 144 c hat den Vorteil, daß im Restwärmetauscher 148 das Abgas und das Zwischenträgermediumspray in Gegenrichtung führbar sind. Der Restwärmetauscher 148 und der Abgasreinigungsreaktor 146 arbeiten dabei wie bereits oben beschrieben.

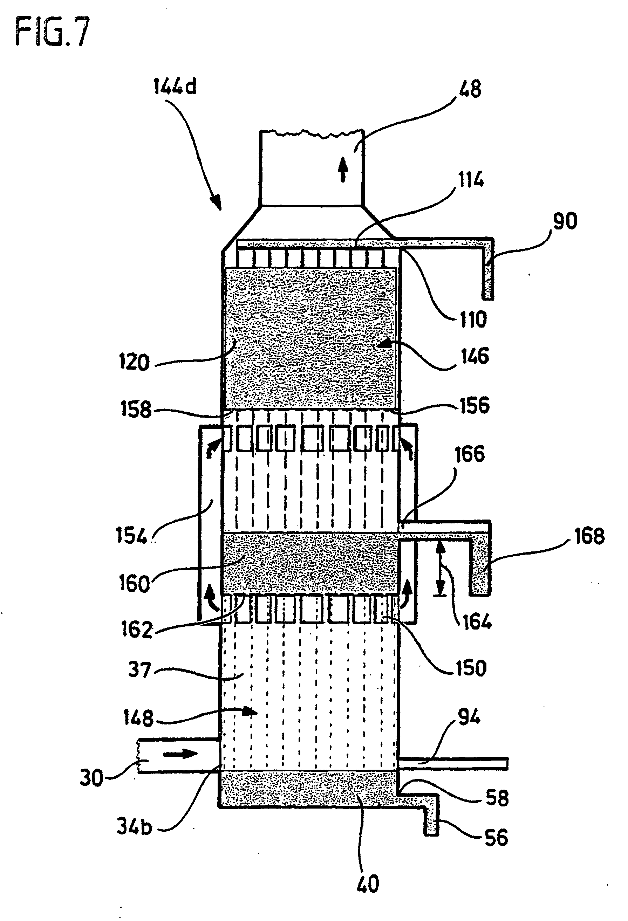

In einem vierten Ausführungsbeispiel einer erfindungsgemäßen Abgas-Wärmetausch-Einheit 144d (Fig. 7) ist der Abgasreinigungsreaktor 146 bezogen auf die Schwerkraftrichtung oberhalb des Restwärmetauschers 148 angeordnet, und die Abgasleitung 30 mündet über den Eintritt 34b in einen unteren Bereich des Restwärmetauschers 148, so daß Abgas in Gegenrichtung zu dem Zwischenträgermediumspray durch den Restwärmetauscher 148 führbar ist.

Über Schlitze 150, welche in einem oberen Bereich des Restwärmetauschers 148 angeordnet sind und einen Ringkanal 154 ist dem Abgasreinigungsreaktor zu reinigendes Abgas aus dem Restwärmetauscher 148 zuführbar.

Der Reinigungsraum 120 des Abgasreinigungsreaktors 146 ist dabei durch ein Durchströmelement 156 gegenüber dem Restwärmetauscher 148 abgegrenzt. Das Durchströmelement 156 weist Öffnungen 158 auf, durch die Reinigungsmedium nach unten in Richtung des Restwärmetauschers 148 strömen kann.

In einem unteren Bereich weist der Abgasreinigungsreaktor 146 einen Sammelbereich 160 auf, in dem sich aus dem Reinigungsbereich 120 über das Durchströmelement 156 kommendes Reinigungsmedium sammelt.

Das Reinigungsmedium des Sammelbereichs 160 steht an einer Düsenplatte 162 des Restwärmetauscher 148 an, wobei es beim Durchströmen der Düsenplatte 162 in ein monodisperses Zwischenträgermediumspray dispergiert wird. Dadurch wird die erfindungsgemäße Abgas-Wärmetausch-Einheit 144d des vierten Ausführungsbeispiels durch ein Trägermedium durchströmt, welches sowohl als Reinigungsmedium als auch als Zwischenträgermedium wirkt.

Der Abgasreinigungsreaktor 146 der Abgas-Wärmetausch-Einheit 144d weist in einem vorgegebenen vertikalen Abstand 164 von der Düsenplatte 162 einen Austritt 166 auf, durch den Trägermedium in eine Leitung 168 abführbar ist. Die Leitung 168 führt dabei zu dem Neutralisator 66.

Durch den Austritt 166 wird ein Massestrom an Trägermedium aus der Abgas-Wärmetausch-Einheit 144d abgezweigt, wobei dieser Massestrom durch die Höhe 164 und durch die Anzahl und durch die Durchmesser von Bohrungen der Düsenplatte 162 bestimmt ist.

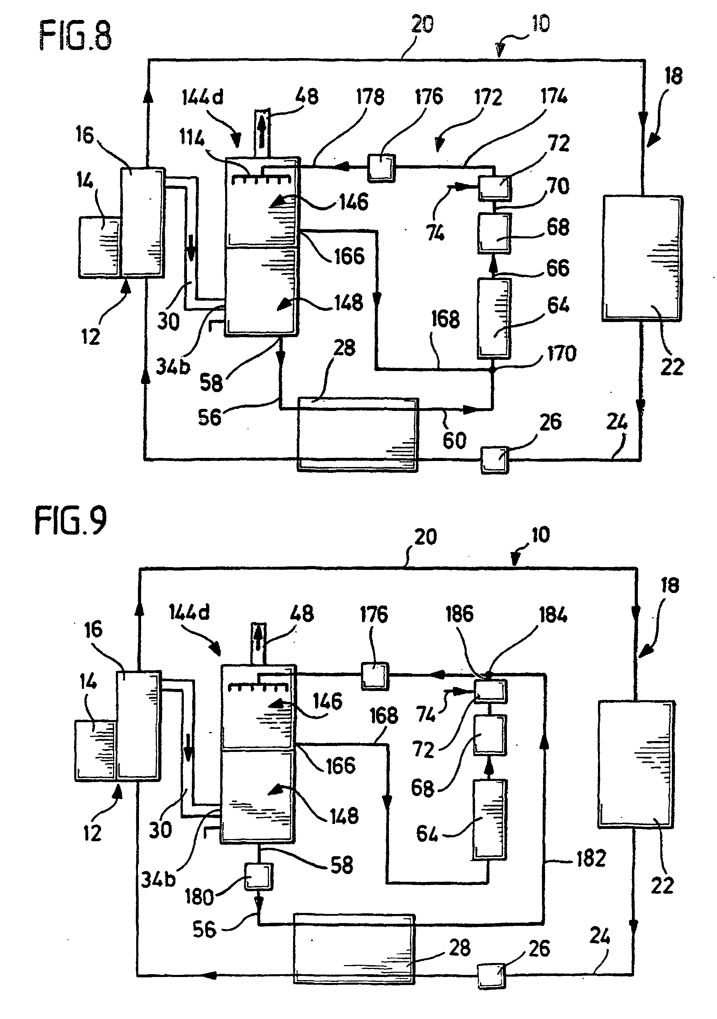

Die erfindungsgemäße Abgas-Wärmetausch-Einheit 144d erlaubt einen vereinfachten Aufbau einer erfindungsgemäßen Vorrichtung zur Nutzung der Restwärme eines Abgases (Fig. 8,9). Der Heizkreis 18 ist dabei grundsätzlich so aufgebaut, wie für das erste und das zweite Ausführungsbeispiel der erfindungsgemäßen Vorrichtung zur Nutzung der Restwärme beschrieben. Gleich aufgebaut ist ebenfalls die Zuführung von Abgas von der Feuerungsanlage zu dem Restwärmetauscher 148 der Abgas-Wärmetausch-Einheit 144d.

Von dem Austritt 166 des Abgasreinigungsreaktors 146 führt die Leitung 168 zu einem ersten Eingang einer Zusammenführung 170. Die Leitung 60 führt von dem Zwischenträgermedium-Heizwasser-Wärmetauscher 28 zu einem zweiten Eingang der Zusammenführung 170. Von dort durchläuft das Trägermedium einen Führungsabschnitt 172, in dem das Zwischenträgermedium und das Reinigungsmedium gemeinsam geführt werden. Dieser Führungsabschnitt 172 umfaßt die Leitung zwischen der Zusammenführung 170 und dem Neutralisator 64, die Leitung 66, den Filter 68, die Leitung 70, den Luftinjektor 72, eine Leitung 174 zwischen dem Luftinjektor 72 und einem saugseitigen Eingang einer Pumpe 176, eine Leitung 178 zwischen einem druckseitigen Ausgang der Pumpe 176 und dem Verteiler 114 des Abgasreinigungsreaktors 146 und die Führungsstrecke für das Trägermedium zwischen dem Verteiler 114 und dem Austritt 166 (Fig. 9).

Diese erfindungsgemäße Vorrichtung mit der Abgas-Wärmetausch-Einheit 144d ist insbesondere dann vorteilhaft, wenn der Strömungswiderstand im Zwischenträgermedium-Heizwasser-Wärmetauscher 28 und im Neutralisator 64 und im Filter 68 klein ist, so daß nur die Pumpe 176 benötigt wird, um das Reinigungsmedium und das Zwischenträgermedium gemeinsam durch den Abgasreinigungsreaktor 146 und den Restwärmetauscher 148 zu führen.

Bei größerem Strömungswiderstand ist es erfindungsgemäß vorgesehen (Fig. 9), daß eine Pumpe 180 in der Leitung 56 zwischen dem Austritt 58 des Restwärmetauschers 148 und einem Eintritt in den Zwischenträgermedium-Heizwasser-Wärmetauscher 28 angeordnet ist. Das Zwischenträgermedium, das den Zwischenträgermedium-Heizwasser-Wärmetauscher 28 durchströmt hat, wird dabei durch eine Leitung 182 zu einem ersten Eingang einer Zusammenführung 184 geführt. Zu einem zweiten Eingang der Zusammenführung 184 führt eine Leitung 186 von dem Luftinjektor 72. Ansonsten ist die Vorrichtung so aufgebaut, wie oben bereits beschrieben.

Bei dieser Variante eines Ausführungsbeispieles wird das von dem Restwärmetauscher 148 kommende Zwischenträgermedium nicht durch den Neutralisator 64 geführt, sondern wird unneutralisiert mit dem aus dem Neutralisator 64 kommenden Teilstrom an der Zusammenführung 184 vermischt.

Dieses Verfahren ist vorteilhaft, wenn der durch den Neutralisator 64 geführte Teilstrom am Ausgang des Neutralisators 64 nicht neutralisiert sondern basisch ist. Dies ist beispielsweise durch lange Verweildauern im Neutralisator verursacht und wirkt sich ungünstig auf den Betrieb aus, da insbesondere in Stillstandsphasen dadurch in der Vorrichtung Ablagerungen entstehen können.

Der unneutralisierte Teilstrom trägt eine Schwefelvorlast, so daß er sauer ist. Durch die Zumischung dieses sauren Teilstroms zu dem basischen Teilstrom an der Zusammenführung 184 erhält man den gewünschten Neutralisierungsgrad, der das Entstehen von Ablagerungen vermindert.

## Patentansprüche

1. Verfahren zur Nutzung der Restwärme, welche die restliche fühlbare und die latente Wärme umfaßt, eines Abgases einer Feuerungsanlage, insbesondere einer Ölfeuerungsanlage, bei dem das Abgas in einem Restwärmetauscher Wärme an ein Zwischenträgermedium abgibt und das Zwischenträgermedium zumindest zeitweise Wärme an Heizwasser in einem Heizkreis abgibt,
**dadurch gekennzeichnet, daß** das Zwischenträgermedium ein Abgaskondensat ist und daß das Abgas nach Durchströmen des Restwärmetauschers mit Wärmeabgabe an das Zwischenträgermedium zur Reinigung einem Abgasreinigungsreaktor zugeführt wird, wobei das Zwischenträgermedium in einem ersten Kreislauf durch den Restwärmetauscher zur Wärmeaufnahme aus dem Abgas geführt wird und ein Reinigungsmedium in einem zweiten Kreislauf durch den Abgasreinigungsreaktor zur Abgasreinigung geführt wird.

2. Verfahren nach Anspruch 1, **dadurch gekennzeichnet, daß** das Reinigungsmedium aus dem gleichen Medium gebildet ist wie das Zwischenträgermedium.

3. Verfahren nach einem der vorangehenden Ansprüche, **dadurch gekennzeichnet, daß** das Zwischenträgermedium und das Reinigungsmedium parallel in dem ersten und dem zweiten Kreislauf geführt werden.

4. Verfahren nach einem der vorangehenden Ansprüche, **dadurch gekennzeichnet, daß** das im ersten Kreislauf strömende Zwischenträgermedium neutralisiert wird.

5. Verfahren nach einem der vorangehenden Ansprüche, **dadurch gekennzeichnet, daß** das im zweiten Kreislauf strömende Reinigungsmedium neutralisiert wird.

6. Verfahren nach einem der vorangehenden Ansprüche, **dadurch gekennzeichnet, daß** das Zwischenträgermedium und das Reinigungsmedium durch einen Führungsabschnitt strömt, welcher dem ersten und dem zweiten Kreislauf gemeinsam angehört.

7. Verfahren nach Anspruch 6, **dadurch gekennzeichnet, daß** das Zwischenträgermedium und das Reinigungsmedium durch einen Neutralisator geführt wird, welcher in dem Führungsabschnitt angeordnet ist.

8. Verfahren nach einem der vorangehenden Ansprüche, **dadurch gekennzeichnet, daß** das Zwischenträgermedium in dem ersten Kreislauf durch eine erste Pumpe befördert wird.

9. Verfahren nach einem der vorangehenden Ansprüche, **dadurch gekennzeichnet, daß** das Reinigungsmedium in dem zweiten Kreislauf durch eine zweite Pumpe befördert wird.

10. Verfahren nach Anspruch 6 oder 7, **dadurch gekennzeichnet, daß** das Zwischenträgermedium und das Reinigungsmedium durch eine gemeinsame Pumpe befördert werden, welche in dem gemeinsamen Führungsabschnitt des ersten und des zweiten Kreislaufs angeordnet ist.

11. Verfahren nach Anspruch 10, **dadurch gekennzeichnet, daß** die gemeinsame Pumpe einen ersten Ausgang zur Beförderung von Zwischenträgermedium im ersten Kreislauf und einen zweiten Ausgang zur Beförderung von Reinigungsmedium im zweiten Kreislauf aufweist.

12. Verfahren nach Anspruch 10 oder 11, **dadurch gekennzeichnet, daß** die gemeinsame Pumpe bezogen auf die Strömungsrichtung nach dem Neutralisator angeordnet ist.

13. Verfahren nach einem der vorangehenden Ansprüche, **dadurch gekennzeichnet, daß** das Zwischenträgermedium Heizwasser in einem Heiz-Heizwasser-Rücklauf des Heizkreises erwärmt.

14. Verfahren nach Anspruch 13, **dadurch gekennzeichnet, daß** der Massestrom des Zwischenträgermediums im ersten Kreislauf in Abhängigkeit von der Temperatur des Heizwassers im Heizwasser-Rücklauf gesteuert wird.

15. Verfahren nach Anspruch 14, **dadurch gekennzeichnet, daß** die durch Nutzung der Restwärme des Abgases bewirkte Erwärmung des Zwischenträgermediums im Bereich von ungefähr 5K bis ungefähr 20K liegt.

16. Verfahren nach einem der vorangehenden Ansprüche, **dadurch gekennzeichnet, daß** der Massestrom des Reinigungsmediums im zweiten Kreislauf im Bereich vom ungefähr 2,8-fachen bis ungefähr 25-fachen des Massestroms des Zwischenträgermediums im ersten Kreislauf ist.

17. Verfahren nach Anspruch 16, **dadurch gekennzeichnet, daß** der Massestrom des Reinigungsmediums im zweiten Kreislauf beim ungefähr siebenfachen des Massestroms des Zwischenträgermediums im ersten Kreislauf ist.

18. Verfahren nach einem der vorangehenden Ansprüche, **dadurch gekennzeichnet, daß** der Restwärmetauscher ein Monodispers-Restwärmetauscher ist.

19. Verfahren nach einem der vorangehenden Ansprüche, **dadurch gekennzeichnet, daß** das Zwischenträgermedium in Schwerkraftrichtung durch den Restwärmetauscher geführt wird.

20. Verfahren nach einem der vorangehenden Ansprüche, **dadurch gekennzeichnet, daß** das Abgas in Gegenrichtung zur Führungsrichtung des Zwischenträgermediums durch den Restwärmetauscher geführt wird.

21. Verfahren nach einem der Ansprüche 1 bis 19, **dadurch gekennzeichnet, daß** das Abgas parallel zur Führungsrichtung des Zwischenträgermediums durch den Restwärmetauscher geführt wird.

22. Verfahren nach einem der vorangehenden Ansprüche, **dadurch gekennzeichnet, daß** das Reinigungsmedium in Schwerkraftrichtung durch den Abgasreinigungsreaktor geführt wird.

23. Verfahren nach einem der vorangehenden Ansprüche, **dadurch gekennzeichnet, daß** das Abgas entgegen der Führungsrichtung des Reini-Reinigungsmediums durch den Abgasreinigungsreaktor geführt wird.

24. Verfahren nach einem der vorangehenden Ansprüche, **dadurch gekennzeichnet, daß** das in dem Abgasreinigungsreaktor gereinigte Abgas mittels des Abgases aus der Feuerungsanlage nacherwärmt wird.

25. Vorrichtung zur Nutzung der Restwärme, welche die restliche fühlbare und die latente Wärme umfaßt, eines Abgases einer Feuerungsanlage (12), insbesondere einer Ölfeuerungsanlage, welche einen Restwärmetauscher (32) umfaßt, in dem Abgas Wärme an ein Zwischenträgermedium abgibt, und welche einen Heizkreis (18) umfaßt, an den durch das Zwischenträgermedium Wärme abgebbar ist, **dadurch gekennzeichnet, daß** das Zwischenträgermedium ein Abgaskondensat ist, daß die Vorrichtung (10) einen Abgasreinigungsreaktor (42; 146) zur Reinigung des Abgases aufweist, welcher bezogen auf den Abgasstrom nach dem Restwärmetauscher (32; 148) angeordnet ist, daß die Vorrichtung (10) einen ersten Kreislauf (54) aufweist, in dem das Zwischenträgermedium durch den Restwärmetauscher (32;148) zur Wärmeaufnahme durch das Abgas führbar ist, und daß die Vorrichtung (10) einen zweiten Kreislauf (96) aufweist, in dem ein Reinigungsmedium durch den Abgasreinigungsreaktor (42;146) zur Abgasreinigung führbar ist.

26. Vorrichtung nach Anspruch 25, **dadurch gekennzeichnet, daß** das Zwischenträgermedium und das Abgasreinigungsmedium aus dem gleichen Medium gebildet sind.

27. Vorrichtung nach einem der Ansprüche 25 oder 26, **dadurch gekennzeichnet, daß** der erste Kreislauf (54) und der zweite Kreislauf (96) einen gemeinsamen Führungsabschnitt (98) aufweisen.

28. Vorrichtung nach Anspruch 27, **dadurch gekennzeichnet, daß** in dem gemeinsamen Führungsabschnitt (98) ein Neutralisator (64) angeordnet ist.

29. Vorrichtung nach einem der Ansprüche 25 bis 28, **dadurch gekennzeichnet, daß** in dem ersten Kreislauf (54) eine Pumpe (82) zur Beförderung des Zwischenträgermediums angeordnet ist.

30. Vorrichtung nach einem der Ansprüche 25 bis 29, **dadurch gekennzeichnet, daß** in dem zweiten Kreislauf (96) eine Pumpe (102) zur Beförderung des Reinigungsmediums angeordnet ist.

31. Vorrichtung nach einem der Ansprüche 27 bis 30, **dadurch gekennzeichnet, daß** in dem gemeinsamen Führungsabschnitt (98) eine Pumpe (138) angeordnet ist, welche einen ersten Ausgang (140) zur Beförderung des Zwischenträgermediums in dem ersten Kreislauf (54) und einen zweiten Ausgang (142) zur Beförderung des Reinigungsmediums in dem zweiten Kreislauf (96) aufweist.

32. Vorrichtung nach einem der Ansprüche 25 bis 31, **dadurch gekennzeichnet, daß** in einem Heizwasser-Rücklauf (24) des Heizkreises (18) ein Zwischenträgermedium-Heizwasser-Wärmetauscher (28) angeordnet ist.

33. Vorrichtung nach einem der Ansprüche 25 bis 32, **dadurch gekennzeichnet, daß** die Vorrichtung (10) eine Steuerungs- und Regelungseinheit (88) umfaßt, welche den Massestrom des Zwischenträgermediums im ersten Kreislauf (54) und den Massestrom des Reinigungsmediums im zweiten Kreislauf (96) steuert.

34. Vorrichtung nach Anspruch 33, **dadurch gekennzeichnet, daß** die Steuerungs- und Regelungseinhelt (88) mit einem Temperaturfühler (26) verbunden ist, welcher im Heizwasser-Rücklauf (24) angeordnet ist.

35. Vorrichtung nach Anspruch 34, **dadurch gekennzeichnet, daß** die Steuerungs- und Regelungseinheit (88) mittels eines Massestrom-Steuerorgans (86) den Massestrom des Zwischenträgermediums im ersten Kreislauf (54) in Abhängigkeit von der Temperatur des Heizwassers im Heizwasser-Rücklauf (24) so steuert, daß die durch Nutzung der Restwärme des Abgases bewirkte Erwärmung des Zwischenträgermediums im Bereich von ungefähr 5K bis ungefähr 20K liegt.

36. Vorrichtung nach Anspruch 35, **dadurch gekennzeichnet, daß** die Steuerungs- und Regelungseinheit (88) den Massestrom des Reinigungsmediums im zweiten Kreislauf (96) mittels eines Massestrom-Steuerorgans (106) so steuert, daß er im Bereich vom ungefähr 2,8-fachen bis ungefähr 25-fachen und vorzugsweise beim ungefähr siebenfachen des Massestroms des Zwischenträgermediums im ersten Kreislauf (54) ist.

37. Vorrichtung nach einem der Ansprüche 25 bis 36, **dadurch gekennzeichnet, daß** der Restwärmetauscher (32;148) eine Monodispers-Restwärmetauscher ist.

38. Vorrichtung nach einem der Ansprüche 25 bis 37, **dadurch gekennzeichnet, daß** der Restwärmetauscher (32;148) einen Eintritt (92) für Zwischenträgermedium aufweist, welcher bezogen auf die Schwerkraftrichtung an oder in der Nähe eines oberen Endes des Restwärmetauschers (32;148) angeordnet ist.

39. Vorrichtung nach einem der Ansprüche 25 bis 38, **dadurch gekennzeichnet, daß** der Restwärmetauscher (32;148) einen Eintritt (34b) für Abgas aus der Feuerungsanlage (12) aufweist, welcher so angeordnet ist, daß das Abgas in Gegenrichtung zum Zwischenträgermedium durch den Restwärmetauscher (32) führbar ist.

40. Vorrichtung nach einem der Ansprüche 25 bis 39, **dadurch gekennzeichnet, daß** der Restwärmetauscher (32) einen Eintritt (34a) für Abgas aus der Feuerungsanlage (12) aufweist, welcher so angeordnet ist, daß das Abgas parallel zur Führungsrichtung des Zwischenträgermediums durch den Restwärmetauscher (32) führbar ist.

41. Vorrichtung nach einem der Ansprüche 25 bis 40, **dadurch gekennzeichnet, daß** der Abgasreinigungsreaktor (42;146) einen Eintritt (110) für Reinigungsmedium aufweist, welche bezogen auf die Schwerkraftrichtung an oder in der Nähe eines oberen Endes des Abgasreinigungsreaktors (42;146) angeordnet ist.

42. Vorrichtung nach einem der Ansprüche 25 bis 41, **dadurch gekennzeichnet, daß** der Abgasreinigungsreaktor (42;146) einen In der Nähe seines oberen Endes angeordneten Reinigungsmedium-Verteiler (114) aufweist, der so ausgebildet ist, daß das Reinigungsmediums auf eine bezüglich der Abgasreinigung aktive Reinigungsoberfläche verteilbar ist.

43. Vorrichtung nach Anspruch 42, **dadurch gekennzeichnet, daß** der Abgasreinigungsreaktor (42;146) zur Erhöhung einer Kontaktfläche zwischen Reinigungsmedium und zu reinigendem Abgas Fließelemente (124) für das Reinigungsmedium aufweist.

44. Vorrichtung nach Anspruch 43, **dadurch gekennzeichnet, daß** der Abgasreinigungsreaktor (42;146) als Fließelemente (124) für das Reinigungsmedium eine Mehrzahl von Böden (125) umfaßt, welche eine Vielzahl von Öffnungen aufweisen und welche bezogen auf die Schwerkraftrichtung in einem vertikalen Abstand voneinander im Abgasreinigungsreaktor (42; 146) angeordnet sind.

45. Vorrichtung nach Anspruch 43 oder 44, **dadurch gekennzeichnet, daß** als Fließelemente (124) für das Reinigungsmedium Formkörper (127) vorgesehen sind.

46. Vorrichtung nach Anspruch 45, **dadurch gekennzeichnet, daß** als Formkörper Raschigringe (127) vorgesehen sind.

47. Vorrichtung nach einem der Ansprüche 25 bis 46, **dadurch gekennzeichnet, daß** der Abgasreinigungsreaktor (146) und der Restwärmetauscher (148) eine Abgas-Wärmetausch-Einheit (144a, 144b, 144c, 144d) bilden.

48. Vorrichtung nach Anspruch 47, **dadurch gekennzeichnet, daß** in der Abgas-Wärmetausch-Einheit (144a) der Restwärmetauscher (148) den Abgasreinigungsreaktor (146) umschließend angeordnet ist.

49. Vorrichtung nach Anspruch 47, **dadurch gekennzeichnet, daß** in der Abgas-Wärmetausch-Einheit (144b) der Abgasreinigungsreaktor (146) den Restwärmetauscher (148) umschließend angeordnet ist.

50. Vorrichtung nach Anspruch 48 oder 49, **dadurch gekennzeichnet, daß** in der Abgas-Wärmetausch-Einheit (144a, 144b) der Abgasreinigungsreaktor (146) und der Restwärmetauscher (148) koaxial angeordnet sind.

51. Vorrichtung nach Anspruch 47, **dadurch gekennzeichnet, daß** in der Abgas-Wärmetausch-Einheit (144c, 144d) der Abgasreinigungsreaktor (146) bezogen auf die Schwerkraftrichtung oberhalb des Restwärmetauschers (148) angeordnet ist.

52. Vorrichtung nach Anspruch 51, **dadurch gekennzeichnet, daß** die Abgaswärmetausch-Einheit (144c, 144d) einen Ringkanal (154) aufweist, durch welchen Abgas aus dem Restwärmetauscher (148) dem Abgasreinigungsreaktor (146) zuführbar ist.

53. Vorrichtung nach Anspruch 52, **dadurch gekennzeichnet, daß** in der Abgas-Wärmetausch-Einheit (144d) ein Sammelbereich (160) des Reinigungsmediums eine Versorgungseinheit eines Zwischenträgermedium-Verteilers (162) des Restwärmetauschers (148) bildet.

54. Vorrichtung nach Anspruch 53, **dadurch gekennzeichnet, daß** die Abgas-Wärmetausch-Einheit (144d) eine Führungsstrecke des Zwischenträgermediums im ersten Kreislauf bildet.

55. Vorrichtung nach Anspruch 53 oder 54, **dadurch gekennzeichnet, daß** der Sammelbereich (160) einen Austritt (166) für Reinigungsmedium zur Führung des Reinigungsmediums im zweiten Kreislauf aufweist.

56. Vorrichtung nach Anspruch 55, **dadurch gekennzeichnet, daß** der Austritt (166) in einem definierten, bezogen auf die Schwerkraftrichtung vertikalen Abstand (164) von dem Zwischenträgermedium-Verteller (162) des Restwärmetauschers (148) angeordnet ist.

57. Vorrichtung nach Anspruch 56, **dadurch gekennzeichnet, daß** das Reinigungsmedium von dem Austritt (166) durch eine Leitung (168) zu dem Neutralisator (64) führbar ist.

58. Vorrichtung nach einem der Ansprüche 53 bis 57, **dadurch gekennzeichnet, daß** die Vorrichtung eine Leitung (182) aufweist, durch welche Zwischenträgermedium unter Umgehung des Neutralisators (64) dem Abgasreinigungsreaktor (146) zuführbar ist.

59. Vorrichtung nach einem der Ansprüche 25 bis 58, **dadurch gekennzeichnet, daß** die Vorrichtung (10) einen Temperaturwechsler (50) aufweist, durch welchen aus dem Abgasreinigungsreaktor (42) kommendes gegereinigtes Abgas mittels von der Feuerungsanlage (12) kommendem Abgas nacherwärmbar ist.

60. Abgas-Wärmetausch-Einheit zur Nutzung der Restwärme, welche die restliche fühlbare und die latente Wärme umfaßt, eines Abgases einer Feuerungsanlage (12), insbesondere einer Ölfeuerungsanlage, in der das Abgas Wärme an ein Zwischenträgermedium abgibt, durch welches zumindest zeitweise Wärme an Heizwasser in einem Heizkreis (18) abgebbar ist, **dadurch gekennzeichnet, daß** die Abgas-Wärmetausch-Einheit (144c, 144d) einen Abgasreinigungsreaktor (146) zur Reinigung des Abgases mittels eines Reinigungsmediums und einen Restwärmetauscher (148) zur Aufnahme von Wärme durch das Zwischenträgermedium aus dem Abgas umfaßt und daß der Abgasreinigungsreaktor (146) bezogen auf die Schwerkraftrichtung oberhalb eines Zwischenträgermedium-Verteilers (162) des Restwärmetauschers (148) angeordnet ist.

61. Abgas-Wärmetausch-Einheit nach Anspruch 60, **dadurch gekennzeichnet, daß** das Reinigungsmedium und das Zwischenträgermedium das gleiche Medium sind.

62. Abgas-Wärmetausch-Einheit nach Anspruch 60 oder 61, **dadurch gekennzeichnet, daß** der Zwischenträgermedium-Verteiler (162) an einem unteren Ende eines Sammelbereiches (160) des Abgasreinigungsreaktors angeordnet ist, so daß der Sammelbereich (160) eine Versorgungseinheit des Zwischenträgermedium-Verteilers (160) bildet.

63. Abgas-Wärmetausch-Einheit nach Anspruch 62, **dadurch gekennzeichnet, daß** der Sammelbereich (160) einen Austritt (166) für Zwischenträgermedium aufweist, welcher bezogen auf die Schwerkraftrichtung in einem definierten vertikalen Abstand (164) von dem Zwischenträgermedium-Verteiler (162) des Restwärmetauschers (148) angeordnet ist.

64. Abgas-Wärmetausch-Einheit nach einem der Ansprüche 60 bis 63, **dadurch gekennzeichnet, daß** die Abgas-Wärmetausch-Einheit (144d) einen Eintritt (110) für Zwischenträgermedium aufweist, welche bezogen auf die Schwerkraftrichtung an oder in der Nähe eines oberen Endes des Abgasreinigungsreaktors (146) angeordnet ist.

65. Abgas-Wärmetausch-Einheit nach Anspruch 64, **dadurch gekennzeichnet, daß** der Abgasreinigungsreaktor (146) in der Nähe seines oberen Endes ein mit dem Eintritt (110) verbundenen Reinigungsmedium-Verteller (114) aufweist, der so ausgebildet ist, daß Reinigungsmedium auf eine bezüglich der Abgasreinigung aktive Reinigungsoberfläche in einem Reinigungsraum (120) des Abgasreinigungsreaktors (146) verteilbar ist.

66. Abgas-Wärmetausch-Einheit nach Anspruch 65, **dadurch gekennzeichnet, daß** der Reinigungsmedium-Verteiler (114) des Abgasreinigungsreaktors (146) ein Verteilerkreuz (115) ist.

67. Abgas-Wärmetausch-Einheit nach Anspruch 65 oder 66, dadurch ge**gekennzeichnet**, daß der Abgasreinigungsreaktor (146) zur Erhöhung der Kontaktfläche zwischen zu reinigendem Abgas und Reinigungsmedium Fließelemente (124) für das Reinigungsmedium aufweist.

68. Abgas-Wärmetausch-Einheit nach Anspruch 67, **dadurch gekennzeichnet, daß** die Fließelemente für das Reinigungsmedium eine Mehrzahl von Böden (125) umfassen, die eine Vielzahl von Öffnungen aufweisen und welche bezogen auf die Schwerkraftrichtung in einem vertikalen Abstand im Abgasreinigungsreaktor (146) angeordnet sind.

69. Abgas-Wärmetausch-Einheit nach Anspruch 67 oder 68, dadurch ge**gekennzeichnet**, daß als Fließelemente (124) Formkörper (127) vorgesehen sind.

70. Abgas-Wärmetausch-Einheit nach Anspruch 69, **dadurch gekennzeichnet, daß** als Formkörper Raschigringe (127) vorgesehen sind.

71. Abgas-Wärmetausch-Einheit nach einem der Ansprüche 60 bis 70, **dadurch gekennzeichnet, daß** der Abgasreinigungsreaktor (146) der Abgas-Abgas-Wärmetausch-Einheit (144d) ein Durchströmelement (158) umfaßt, welches bezogen auf die Schwerkraftrichtung in einem definierten vertikalen Abstand bezogen auf den Zwischenträgermedium-Verteiler (162) des Restwärmetauschers (148) angeordnet ist.

72. Abgas-Wärmetausch-Einheit nach einem der Ansprüche 60 bis 71, **dadurch gekennzeichnet, daß** die Abgas-Wärmetausch-Einheit (144d) in der Nähe ihres unteren Endes im Restwärmetauscher (148) einen Eintritt (34b) für Abgas aufweist.

73. Abgas-Wärmetausch-Einheit nach einem der Ansprüche 60 bis 72, **dadurch gekennzeichnet, daß** die Abgas-Wärmetausch-Einheit (144d) einen Ringkanal (154) aufweist, mittels dem Abgas aus dem Restwärmetauscher (148) dem Abgasreinigungsreaktor der Abgas-Wärmetausch-Einheit (144d) zuführbar ist.

## Claims

1. Method for using the residual heat, comprising the residual perceptible and the latent heat, of an exhaust gas of a furnace installation in particular of an oil furnace installation, in which the exhaust gas in a residual heat exchanger gives off heat to an intermediate carrier medium and the intermediate carrier medium gives off heat to heating water in a heating circuit, at least intermittently, **characterised in that** the intermediate carrier medium is an exhaust gas condensate and **in that** the exhaust gas, after flowing through the residual heat exchanger with heat discharge to the intermediate carrier medium, is fed to an exhaust gas cleaning reactor for cleaning, wherein the intermediate carrier medium is fed in a first circuit through the residual heat exchanger for heat absorption from the exhaust gas and a cleaning medium is fed in a second circuit through the exhaust gas cleaning reactor for exhaust gas cleaning.

2. Method according to claim 1, **characterised in that** the cleaning medium is formed from the same medium as the intermediate carrier medium.

3. Method according to any one of the preceding claims, **characterised in that** the intermediate carrier medium and the cleaning medium are guided in parallel in the first and second circuit.

4. Method according to any one of the preceding claims, **characterised in that** the intermediate carrier medium flowing in the first circuit is neutralised.

5. Method according to any one of the preceding claims, **characterised in that** cleaning medium flowing in the second circuit is neutralised.

6. Method according to any one of the preceding claims, **characterised in that** the intermediate carrier medium and the cleaning medium flow through a guide section belonging to the first and second circuit jointly.

7. Method according to claim 6, **characterised in that** the intermediate carrier medium and the cleaning medium are guided through a neutraliser arranged in the guide section.

8. Method according to any one of the preceding claims, **characterised in that** the intermediate carrier medium is conveyed in the first circuit through a first pump.

9. Method according to any one of the preceding claims, **characterised in that** the cleaning medium is conveyed in the second circuit through a second pump.

10. Method according to claim 6 or 7, **characterised in that** the intermediate carrier medium and the cleaning medium are conveyed by a common pump, arranged in the common guide section of the first and second circuit.

11. Method according to claim 10, **characterised in that** the common pump has a first exit for conveying intermediate carrier medium in the first circuit and a second exit for conveying cleaning medium in the second circuit.

12. Method according to claim 10 or 11, **characterised in that** the common pump is arranged downstream from the neutraliser with respect to the flow direction.

13. Method according to any one of the preceding claims, **characterised in that** the intermediate carrier medium heats heating water in a heating water return of the heating circuit.

14. Method according to claim 13, **characterised in that** the mass flow of the intermediate carrier medium in the first circuit is controlled as a function of the temperature of the heating water in the heating water return.

15. Method according to claim 14, **characterised in that** the heating of the intermediate carrier medium effected by the recovery of the residual heat of the exhaust gas is in the range of about 5 K to about 20 K.

16. Method according to any one of the preceding claims, **characterised in that** the mass flow of the cleaning medium in the second circuit is in the range of about 2.8 times to about 25 times the mass flow of the intermediate carrier medium in the first circuit.

17. Method according to claim 16, **characterised in that** the mass flow of the cleaning medium in the second circuit is about seven times the mass flow of the intermediate carrier medium in the first circuit.

18. Method according to any one of the preceding claims, **characterised in that** the residual heat exchanger is a monodisperse residual heat exchanger.

19. Method according to any one of the preceding claims, **characterised in that** the intermediate carrier medium is guided in the direction of gravity by the residual heat exchanger.

20. Method according to any one of the preceding claims, **characterised in that** the exhaust gas is guided through the residual heat exchanger in the opposite direction to the guide direction of the intermediate carrier medium.

21. Method according to any one of claims 1 to 19, **characterised in that** the exhaust gas is guided through the residual heat exchanger in parallel to the guide direction of the intermediate carrier medium.

22. Method according to any one of the preceding claims, **characterised in that** the cleaning medium is guided through the exhaust gas cleaning reactor in the direction of gravity.

23. Method according to any one of the preceding claims, **characterised in that** the exhaust gas is guided through the exhaust gas cleaning reactor counter to the guide direction of the cleaning medium.

24. Method according to any one of the preceding claims, **characterised in that** the exhaust gas cleaned in the exhaust gas cleaning reactor is reheated by means of the exhaust gas from the furnace installation.

25. Device for using the residual heat, comprising the residual perceptible and the latent heat, of an exhaust gas of a furnace installation (12), in particular an oil furnace installation comprising a residual heat exchanger (32), in which exhaust gas gives off heat to an intermediate carrier medium, and which comprises a heating circuit (18) to which heat can be given off by the intermediate carrier medium, **characterised in that** the intermediate carrier medium is an exhaust gas condensate, **in that** the device (10) comprises an exhaust gas cleaning reactor (42; 146) for cleaning the exhaust gas arranged downstream from the residual heat exchanger (32; 148) with respect to the exhaust gas flow, **in that** the device (10) comprises a first circuit (54), in which the intermediate carrier medium can be guided through the residual heat exchanger (32, 148) for heat absorption owing to the exhaust gas, and **in that** the device (10) comprises a second circuit (96), in which a cleaning medium can be guided through the exhaust gas cleaning reactor (42; 146) for exhaust gas cleaning.

26. Device according to claim 25, **characterised in that** the intermediate carrier medium and the exhaust gas cleaning medium are formed from the same medium.

27. Device according to either of claims 25 or 26, **characterised in that** the first circuit (54) and the second circuit (96) have a common guide section (98).

28. Device according to claim 27, **characterised in that** a neutraliser (64) is arranged in the common guide section (98).

29. Device according to any one of claims 25 to 28, **characterised in that** a pump (82) for conveying the intermediate carrier medium is arranged in the first circuit (54).

30. Device according to any one of claims 25 to 29, **characterised in that** a pump (102) for conveying the cleaning medium is arranged in the second circuit (96).

31. Device according to any one of claims 27 to 30, **characterised in that** arranged in the common guide section (98) is a pump (138) comprising a first exit (140) for conveying the intermediate carrier medium in the first circuit (54) and a second exit (148) for conveying the cleaning medium in the second circuit (96).

32. Device according to any one of claims 25 to 31, **characterised in that** arranged in a heating water return (24) of the heating circuit (18) is an intermediate carrier medium heating water heat exchanger (28).

33. Device according to any one of claims 25 to 32, **characterised in that** the device (10) comprises a control and adjustment unit (88) controlling the mass flow of the intermediate carrier medium in the first circuit (54) and the mass flow of the cleaning medium in the second circuit (96).

34. Device according to claim 33, **characterised in that** the control and adjustment unit (88) is connected to a temperature sensor (26) arranged in the heating water return (24).

35. Device according to claim 34, **characterised in that** the control and adjustment unit (88) controls the mass flow of the intermediate carrier medium in the first circuit (54) by means of a mass flow control member (86) as a function of the temperature of the heating water in the heating water return (24) in such a way that the heating of the intermediate carrier medium effected by recovery of the residual heat of the exhaust gas is in the range of about 5 K to about 20 K.

36. Device according to claim 35, **characterised in that** the control and adjustment unit (88) controls the mass flow of the cleaning medium in the second circuit (96) by means of a mass flow control member (106) in such a way that it is in the range of about 2.8 times to about 25 times and preferably about seven times the mass flow of the intermediate carrier medium in the first circuit (54).

37. Device according to any one of claims 25 to 36, **characterised in that** the residual heat exchanger (32; 148) is a monodisperse residual heat exchanger.

38. Device according to any one of claims 25 to 37, **characterised in that** the residual heat exchanger (32; 148) comprises an inlet (92) for intermediate carrier medium arranged at or close to an upper end of the residual heat exchanger (32; 148) with respect to the direction of gravity.

39. Device according to any one of claims 25 to 38, **characterised in that** the residual heat exchanger (32; 148) comprises an inlet (34b) for exhaust gas from the furnace installation (12), the inlet being arranged such that the exhaust gas can be guided through the residual heat exchanger (32) in the opposite direction to the intermediate carrier medium.

40. Device according to any one of claims 25 to 39, **characterised in that** the residual heat exchanger (32) comprises an inlet (34a) for exhaust gas from the furnace installation (12), the inlet being arranged such that the exhaust gas can be guided through the residual heat exchanger (32) in parallel to the guide direction of the intermediate carrier medium.

41. Device according to any one of claims 25 to 40, **characterised in that** the exhaust gas cleaning reactor (42; 146) comprises an inlet (110) for cleaning medium, the inlet being arranged at or close to an upper end of the exhaust gas cleaning reactor (42; 146) with respect to the direction of gravity.

42. Device according to any one of claims 25 to 41, **characterised in that** the exhaust gas cleaning reactor (42; 146) comprises a cleaning medium distributor (114) arranged close to its upper end, designed in such a way that the cleaning medium can be distributed on an active cleaning surface with respect to the exhaust gas cleaning.

43. Device according to claim 42, **characterised in that** the exhaust gas cleaning reactor (42; 146) comprises flow elements (124) for the cleaning medium to increase a contact face between the cleaning medium and exhaust gas to be cleaned.

44. Device according to claim 43, **characterised in that** the exhaust gas cleaning reactor (42; 146) comprises a plurality of bases (125) as flow elements (124) for the cleaning medium, which bases comprise a large number of apertures and which are arranged in the exhaust gas cleaning reactor (42; 146) at a vertical spacing from one another with respect to the direction of gravity.

45. Device according to claim 43 or 44, **characterised in that** shaped bodies (127) are provided as flow elements (124) for the cleaning medium.

46. Device according to claim 45, **characterised in that** Raschig rings (127) are provided as shaped bodies.

47. Device according to any one of claims 25 to 46, **characterised in that** the exhaust gas cleaning reactor (146) and the residual heat exchanger (148) form an exhaust gas heat exchange unit (144a, 144b, 144c, 144d).

48. Device according to claim 47, **characterised in that** in the exhaust gas heat exchange unit (144a) the residual heat exchanger (148) is arranged surrounding the exhaust gas cleaning reactor (146).

49. Device according to claim 47, **characterised in that** in the exhaust gas heat exchange unit (144b) the exhaust gas cleaning reactor (146) is arranged surrounding the residual heat exchanger (148).

50. Device according to claim 48 or 49, **characterised in that** in the exhaust gas heat exchange unit (144a, 144b) the exhaust gas cleaning reactor (146) and the residual heat exchanger (148) are arranged coaxially.

51. Device according to claim 47, **characterised in that** in the exhaust gas heat exchange unit (144c, 144d) the exhaust gas cleaning reactor (146) is arranged above the residual heat exchanger (148) with respect to the direction of gravity.

52. Device according to claim 51, **characterised in that** the exhaust gas heat exchange unit (144c, 144d) comprises an annular channel (154), through which exhaust gas can be fed from the residual heat exchanger (148) to the exhaust gas cleaning reactor (146).

53. Device according to claim 52, **characterised in that** in the exhaust gas heat exchange unit (144d) a collecting region (160) of the cleaning medium forms a supply unit of an intermediate carrier medium distributor (162) of the residual heat exchanger (148).

54. Device according to claim 53, **characterised in that** the exhaust gas heat exchange unit (144d) forms a guide section of the intermediate carrier medium in the first circuit.

55. Device according to claim 53 or 54, **characterised in that** the collecting region (160) has an outlet (166) for cleaning medium to guide the cleaning medium in the second circuit.

56. Device according to claim 55, **characterised in that** the outlet (166) is arranged at a defined vertical spacing (164) with respect to the direction of gravity from the intermediate carrier medium distributor (162) of the residual heat exchanger (148).

57. Device according to claim 56, **characterised in that** the cleaning medium can be guided from the outlet (166) through a line (168) to the neutraliser (64).

58. Device according to any one of claims 53 to 57, **characterised in that** the device has a line (182) through which intermediate carrier medium can be fed to the exhaust gas cleaning reactor (146) bypassing the neutraliser (64).

59. Device according to any one of claims 25 to 58, **characterised in that** the device (10) has a temperature changer (50), through which cleaned exhaust gas coming from the exhaust gas cleaning reactor (42) can be reheated by means of exhaust gas coming from the furnace installation (12).

60. Exhaust gas heat exchange unit for using residual heat, comprising the residual perceptible and the latent heat, of an exhaust gas of a furnace installation (12), in particular an oil furnace installation, in which the exhaust gas gives off heat to an intermediate carrier medium, by means of which heat can be given off at least intermittently to heating water in a heating circuit (18), **characterised in that** the exhaust gas heat exchange unit (144c, 144d) comprises an exhaust gas cleaning reactor (146) for cleaning the exhaust gas by means of a cleaning medium and a residual heat exchanger (148) for heat absorption by the intermediate carrier medium from the exhaust gas and **in that** the exhaust gas cleaning reactor (146) is arranged above an intermediate carrier medium distributor (162) of the residual heat exchanger (148), with respect to the direction of gravity.

61. Exhaust gas heat exchange unit according to claim 60, **characterised in that** the cleaning medium and the intermediate carrier medium are the same medium.

62. Exhaust gas heat exchange unit according to claim 60 or 61, **characterised in that** the intermediate carrier medium distributor (162) is arranged at a lower end of a collecting region (162) of the exhaust gas cleaning reactor, so the collecting region (160) forms a supply unit of the intermediate carrier medium distributor (160).

63. Exhaust gas heat exchange unit according to claim 62, **characterised in that** the collecting region (160) has an outlet (166) for intermediate carrier medium, which is arranged at a defined vertical spacing (164), with respect to the direction of gravity, from the intermediate carrier medium distributor (162) of the residual heat exchanger (148).

64. Exhaust gas heat exchange unit according to any one of claims 60 to 63, **characterised in that** the exhaust gas heat exchange unit (144d) has an inlet (110) for intermediate carrier medium, which inlet is arranged at or close to an upper end of the exhaust gas cleaning reactor (146) with respect to the direction of gravity.

65. Exhaust gas heat exchange unit according to claim 64, **characterised in that** the exhaust gas cleaning reactor (146) has, in the region of its upper end, a cleaning medium distributor (14) connected to the inlet (110), which inlet is designed in such a way that cleaning medium can be distributed on an active cleaning surface with respect to the exhaust gas cleaning in a cleaning space (120) of the exhaust gas cleaning reactor (146).

66. Exhaust gas heat exchange unit according to claim 65, **characterised in that** the cleaning medium distributor (114) of the exhaust gas cleaning reactor (146) is a distributor cross (115).

67. Exhaust gas heat exchange unit according to claim 65 or 66, **characterised in that** the exhaust gas cleaning reactor (146) has flow elements (124) for the cleaning medium to increase the contact face between exhaust gas to be cleaned and cleaning medium.

68. Exhaust gas heat exchange unit according to claim 67, **characterised in that** the flow elements for the cleaning medium comprise a plurality of bases (125) having a large number of apertures and which are arranged at a vertical spacing, with respect to the direction of gravity, in the exhaust gas cleaning reactor (146).

69. Exhaust gas heat exchange unit according to claim 67 or 68, **characterised in that** shaped bodies (127) are provided as flow elements (124).

70. Exhaust gas heat exchange unit according to claim 69, **characterised in that** Raschig rings (127) are provided as shaped bodies.

71. Exhaust gas heat exchange unit according to any one of claims 60 to 70, **characterised in that** the exhaust gas cleaning reactor (146) of the exhaust gas heat exchange unit (144d) comprises a through-flow element (158) which, with respect to the direction of gravity, is arranged at a defined vertical spacing with respect to the intermediate carrier medium distributor (162) of the residual heat exchanger (148).

72. Exhaust gas heat exchange unit according to any one of claims 60 to 71, **characterised in that** the exhaust gas heat exchange unit (144d) has an inlet (34b) for exhaust gas close to its lower end in the residual heat exchanger (148).

73. Exhaust gas heat exchange unit according to any one of claims 60 to 72, **characterised in that** the exhaust gas heat exchange unit (144d) has an annular channel (154), by means of which exhaust gas can be fed from the residual heat exchanger (148) to the exhaust gas cleaning reactor of the exhaust gas heat exchange unit (144d).

## Revendications

1. Procédé de récupération de la chaleur résiduelle, qui comprend la chaleur sensible résiduelle et la chaleur latente, dans les fumées d'un foyer, en particulier d'un foyer à mazout, dans lequel les fumées délivrent de la chaleur dans un échangeur de chaleur résiduelle à un milieu porteur intermédiaire et dans lequel le milieu porteur intermédiaire délivre au moins temporairement de la chaleur à de l'eau de chauffage dans un circuit de chauffage,
**caractérisé en ce que** le milieu porteur intermédiaire est un condensat des fumées et **en ce que** les fumées, après écoulement à travers l'échangeur de chaleur résiduelle avec transfert de chaleur au milieu porteur intermédiaire, sont amenées à un réacteur d'épuration des fumées pour être épurées, et dans lequel le milieu porteur intermédiaire est amené dans un premier circuit à travers l'échangeur de chaleur résiduelle pour l'extraction de chaleur des fumées, et un milieu de dépollution est amené à travers le réacteur d'épuration des fumées dans un deuxième circuit pour l'épuration des fumées.

2. Procédé selon la revendication 1, **caractérisé en ce que** le milieu de dépollution est formé du même milieu que le milieu porteur intermédiaire.

3. Procédé selon l'une quelconque des revendications précédentes, **caractérisé en ce que** le milieu porteur intermédiaire et le milieu de dépollution sont conduits parallèlement dans le premier et dans le deuxième circuit.

4. Procédé selon l'une quelconque des revendications précédentes, **caractérisé en ce que** le milieu porteur intermédiaire qui s'écoule dans le premier circuit est neutralisé.

5. Procédé selon l'une quelconque des revendications précédentes, **caractérisé en ce que** le milieu de dépollution qui s'écoule dans le deuxième circuit est neutralisé.

6. Procédé selon l'une quelconque des revendications précédentes, **caractérisé en ce que** le milieu porteur intermédiaire et le milieu de dépollution s'écoulent à travers une section de conduite qui appartient en commun au premier et au deuxième circuit.

7. Procédé selon la revendication 6, **caractérisé en ce que** le milieu porteur intermédiaire et le milieu de dépollution sont conduits à travers un neutralisateur qui est disposé dans la section de conduite.

8. Procédé selon l'une quelconque des revendications précédentes, **caractérisé en ce que** le milieu porteur intermédiaire est transporté dans le premier circuit par une première pompe.

9. Procédé selon l'une quelconque des revendications précédentes, **caractérisé en ce que** le milieu de dépollution est transporté dans le deuxième circuit par une deuxième pompe.

10. Procédé selon la revendication 6 ou 7, **caractérisé en ce que** le milieu porteur intermédiaire et le milieu de dépollution sont transportés par une pompe commune, qui est disposée dans la section de conduite commune des premier et deuxième circuits.

11. Procédé selon la revendication 10, **caractérisé en ce que** la pompe commune comporte une première sortie pour le transport du milieu porteur intermédiaire dans le premier circuit et une deuxième sortie pour le transport du milieu de dépollution dans le deuxième circuit.

12. Procédé selon la revendication 10 ou 11, **caractérisé en ce que**, rapporté au sens de l'écoulement, la pompe commune est disposée en aval du neutralisateur.

13. Procédé selon l'une quelconque des revendications précédentes, **caractérisé en ce que** le milieu porteur intermédiaire réchauffe de l'eau de chauffage dans un retour de l'eau de chauffage du circuit de chauffage.

14. Procédé selon la revendication 13, **caractérisé en ce que** le débit massique du milieu porteur intermédiaire dans le premier circuit est commandé en fonction de la température de l'eau de chauffage dans le retour d'eau de chauffage.

15. Procédé selon la revendication 14, **caractérisé en ce que** l'échauffement du milieu porteur intermédiaire, provoqué par la récupération de la chaleur résiduelle des fumées, est compris dans l'intervalle d'environ 5 K à environ 20 K.

16. Procédé selon l'une quelconque des revendications précédentes, **caractérisé en ce que** le débit massique du milieu de dépollution dans le deuxième circuit est compris dans l'intervalle d'environ 2,8 fois à environ 25 fois le débit massique du milieu porteur intermédiaire dans le premier circuit.

17. Procédé selon la revendication 16, **caractérisé en ce que** le débit massique du milieu de dépollution dans le deuxième circuit est d'environ sept fois le débit massique du milieu porteur intermédiaire dans le premier circuit.

18. Procédé selon l'une quelconque des revendications précédentes, **caractérisé en ce que** l'échangeur de chaleur résiduelle est un échangeur de chaleur résiduelle à monodispersion.

19. Procédé selon l'une quelconque des revendications précédentes, **caractérisé en ce que** le milieu porteur intermédiaire est envoyé à travers l'échangeur de chaleur résiduelle dans le sens de la pesanteur.

20. Procédé selon l'une quelconque des revendications précédentes, **caractérisé en ce que** les fumées sont conduites à travers l'échangeur de chaleur résiduelle en sens opposé du sens de conduite du milieu porteur intermédiaire.

21. Procédé selon l'une quelconque des revendications 1 à 19, **caractérisé en ce que** les fumées sont conduites à travers l'échangeur de chaleur résiduelle parallèlement au sens de conduite du milieu porteur intermédiaire.

22. Procédé selon l'une quelconque des revendications précédentes, **caractérisé en ce que** le milieu de dépollution est conduit à travers le réacteur d'épuration des fumées dans le sens de la pesanteur.

23. Procédé selon l'une quelconque des revendications précédentes, **caractérisé en ce que** les fumées sont conduites à travers le réacteur d'épuration des fumées à l'encontre du sens de conduite du milieu de dépollution.

24. Procédé selon l'une quelconque des revendications précédentes, **caractérisé en ce que** les fumées épurées dans le réacteur d'épuration des fumées sont réchauffées ultérieurement au moyen des fumées en provenance du foyer.

25. Dispositif pour la récupération de la chaleur résiduelle, qui comprend la chaleur sensible résiduelle et la chaleur latente, des fumées d'un foyer (12), en particulier d'un foyer à mazout, qui comprend un échangeur de chaleur résiduelle (32) dans lequel les fumées transfèrent de la chaleur à un milieu porteur intermédiaire, et qui comprend un circuit de chauffage (18), auquel de la chaleur peut être délivrée par un milieu porteur intermédiaire, **caractérisé en ce que** le milieu porteur intermédiaire est un condensat des fumées, **en ce que** le dispositif (10) comprend un réacteur d'épuration des fumées (42 ; 146) pour l'épuration des fumées, lequel, rapporté au courant des fumées, est disposé en aval de l'échangeur de chaleur résiduelle (32 ; 148), **en ce que** le dispositif (10) comprend un premier circuit (54), dans lequel le milieu porteur intermédiaire peut être conduit à travers l'échangeur de chaleur résiduelle (32 ; 148) pour l'extraction de chaleur des fumées, et **en ce que** le dispositif (10) comporte un deuxième circuit (96), dans lequel un milieu de dépollution peut être conduit à travers le réacteur d'épuration des fumées (42 ; 146) pour l'épuration des fumées.

26. Dispositif selon la revendication 25, **caractérisé en ce que** le milieu porteur intermédiaire et le milieu de dépollution sont formé du même milieu.

27. Dispositif selon la revendication 25 ou 26, **caractérisé en ce que** le premier circuit (54) et le deuxième circuit (96) comportent une section de conduite commune (98).

28. Dispositif selon la revendication 27, **caractérisé en ce qu'**un neutralisateur (64) est disposé dans la section de conduite commune (98).

29. Dispositif selon l'une quelconque des revendications 25 à 28, **caractérisé en ce que** dans le premier circuit (54) est disposée une pompe (82) pour le transport du milieu porteur intermédiaire.

30. Dispositif selon l'une quelconque des revendications 25 à 29, **caractérisé en ce que** dans le deuxième circuit (96) est disposée une pompe (102) pour le transport du milieu de dépollution.

31. Dispositif selon l'une quelconque des revendications 27 à 30, **caractérisé en ce que** dans la section de conduite commune (98) est disposée une pompe (138), qui comporte une première sortie (140) pour le transport du milieu porteur intermédiaire dans le premier circuit (54) et une deuxième sortie (142) pour le transport du milieu de dépollution dans le deuxième circuit (96).

32. Dispositif selon l'une quelconque des revendications 25 à 31, **caractérisé en ce que** dans un retour de l'eau de chauffage (24) du circuit de chauffage (18) est disposé un échangeur de chaleur (28) entre le milieu porteur intermédiaire et l'eau de chauffage.

33. Dispositif selon l'une quelconque des revendications 25 à 32, **caractérisé en ce que** le dispositif (10) comprend une unité de commande et de régulation (88) qui commande le débit massique du milieu porteur intermédiaire dans le premier circuit (54) et le débit massique du milieu de dépollution dans le deuxième circuit (96).

34. Dispositif selon la revendication 33, **caractérisé en ce que** l'unité de commande et de régulation (88) est reliée à une sonde de température (26), laquelle est disposée dans le retour de l'eau de chauffage (24).

35. Dispositif selon la revendication 34, **caractérisé en ce que** l'unité de commande et de régulation (88) commande le débit massique du milieu porteur intermédiaire dans le premier circuit (54), au moyen d'un organe de commande du débit massique (86), en fonction de la température de l'eau de chauffage dans le retour de l'eau de chauffage (24), de telle sorte que l'échauffement du milieu porteur intermédiaire par la récupération de la chaleur résiduelle des fumées est compris dans l'intervalle d'environ 5 K à environ 20 K.

36. Dispositif selon la revendication 35, **caractérisé en ce que** l'unité de commande et de régulation (88) commande le débit massique du milieu de dépollution dans le deuxième circuit (96), au moyen d'un organe de commande du débit massique (106), de telle sorte qu'il soit compris dans l'intervalle d'environ 2,8 fois à environ 25 fois, et de préférence d'environ 7 fois, le débit massique du milieu porteur intermédiaire dans le premier circuit (54).

37. Dispositif selon l'une quelconque des revendications 25 à 36, **caractérisé en ce que** l'échangeur de chaleur résiduelle (32 ; 148) est un échangeur de chaleur résiduelle à monodispersion.

38. Dispositif selon l'une quelconque des revendications 25 à 37, **caractérisé en ce que** l'échangeur de chaleur résiduelle (32 ; 148) comporte une entrée (92) pour le milieu porteur intermédiaire, laquelle, rapportée à la direction de la pesanteur, est disposée à une extrémité supérieure de l'échangeur de chaleur résiduelle (32 ; 148) ou à son voisinage.

39. Dispositif selon l'une quelconque des revendications 25 à 38, **caractérisé en ce que** l'échangeur de chaleur résiduelle (32 ; 148) comporte une entrée (34b) pour les fumées en provenance du foyer (12), laquelle est disposée de telle sorte que les fumées peuvent être conduites à travers l'échangeur de chaleur résiduelle (32) à contre-courant du milieu porteur intermédiaire.

40. Dispositif selon l'une quelconque des revendications 25 à 39, **caractérisé en ce que** l'échangeur de chaleur résiduelle (32) comporte une entrée (34a) pour les fumées en provenance du foyer (12), laquelle est disposée de telle sorte que les fumées peuvent être conduites à travers l'échangeur de chaleur résiduelle (32) parallèlement à la direction de conduite du milieu porteur intermédiaire.

41. Dispositif selon l'une quelconque des revendications 25 à 40, **caractérisé en ce que** le réacteur d'épuration des fumées (42 ; 146) comporte une entrée (110) pour le milieu de dépollution, laquelle rapportée à la direction de la pesanteur, est disposée à une extrémité supérieure du réacteur d'épuration des fumées (42 ; 146) ou à son voisinage.

42. Dispositif selon l'une quelconque des revendications 25 à 41, **caractérisé en ce que** le réacteur d'épuration des fumées (42 ; 146) comporte un distributeur de milieu de dépollution (114) disposé au voisinage de son extrémité supérieure, distributeur qui est configuré de telle sorte que le milieu de dépollution peut être distribué sur une surface d'épuration active du point de vue de l'épuration des fumées.

43. Dispositif selon la revendication 42, **caractérisé en ce que** le réacteur d'épuration des fumées (42 ; 146) comporte des éléments d'écoulement (124) pour le milieu de dépollution en vue de l'accroissement de la surface de contact entre le milieu de dépollution et les fumées à épurer.

44. Dispositif selon la revendication 43, **caractérisé en ce que** le réacteur d'épuration des fumées (42 ; 146) comprend comme éléments d'écoulement (124) pour le milieu de dépollution une pluralité de plateaux (125), lesquels présentent une multitude d'ouvertures et qui, rapporté à la direction de la pesanteur, sont disposés à distance verticale les uns des autres dans le réacteur d'épuration des fumées (42 ; 146).

45. Dispositif selon la revendication 43 ou 44, **caractérisé en ce que** des corps moulés (127) sont prévus comme éléments d'écoulement (124) pour le milieu de dépollution.

46. Dispositif selon la revendication 45, **caractérisé en ce que** des anneaux de Raschig (127) sont prévus comme corps moulés.

47. Dispositif selon l'une quelconque des revendications 25 à 46, **caractérisé en ce que** le réacteur d'épuration des fumées (146) et l'échangeur de chaleur résiduelle (148) forment une unité d'échangeur de chaleur des fumées (144a, 144b, 144c, 144d).

48. Dispositif selon la revendication 47, **caractérisé en ce que** dans l'unité d'échangeur de chaleur des fumées (144a) est disposé l'échangeur de chaleur résiduelle (148), enserrant le réacteur d'épuration des fumées (146).

49. Dispositif selon la revendication 47, **caractérisé en ce que** dans l'unité d'échangeur de chaleur des fumées (144b) est disposé le réacteur d'épuration des fumées (146), enserrant l'échangeur de chaleur résiduelle (148).

50. Dispositif selon la revendication 48 ou 49, **caractérisé en ce que** dans l'unité d'échangeur de chaleur des fumées (144a, 144b), le réacteur d'épuration des fumées (146) et l'échangeur de chaleur résiduelle (148) sont disposés coaxialement.

51. Dispositif selon la revendication 47, **caractérisé en ce que** dans l'unité d'échangeur de chaleur des fumées (144c, 144d), rapporté à la direction de la pesanteur, le réacteur d'épuration des fumées (146) est disposé au-dessus de l'échangeur de chaleur résiduelle (148).

52. Dispositif selon la revendication 51, **caractérisé en ce que** l'unité d'échangeur de chaleur des fumées (144c, 144d) comporte un canal annulaire (154) par lequel les fumées en provenance de l'échangeur de chaleur résiduelle (148) peuvent être envoyées au réacteur d'épuration des fumées (146).

53. Dispositif selon la revendication 52, **caractérisé en ce que** dans l'unité d'échangeur de chaleur des fumées (144d), une zone collectrice (160) du milieu de dépollution forme une unité d'alimentation d'un distributeur de milieu porteur intermédiaire (162) de l'échangeur de chaleur résiduelle (148).

54. Dispositif selon la revendication 53, **caractérisé en ce que** l'unité d'échangeur de chaleur des fumées (144d) forme un trajet de conduite du milieu porteur intermédiaire dans le premier circuit.

55. Dispositif selon la revendication 53 ou 54, **caractérisé en ce que** la zone collectrice (160) comporte une sortie (166) pour le milieu de dépollution pour la conduite du milieu de dépollution dans le deuxième circuit.

56. Dispositif selon la revendication 55, **caractérisé en ce que**, rapporté à la direction de la pesanteur, la sortie (166) est disposée à une distance verticale définie (164) du distributeur de milieu porteur intermédiaire (162) de l'échangeur de chaleur résiduelle (148).

57. Dispositif selon la revendication 56, **caractérisé en ce que** le milieu de dépollution peut être amené de la sortie (166) au neutralisateur (64) par une conduite (168).

58. Dispositif selon l'une quelconque des revendications 53 à 57, **caractérisé en ce que** le dispositif comporte une conduite (182) par laquelle le milieu porteur intermédiaire peut être amené au réacteur d'épuration des fumées (146) par le contournement du neutralisateur (64).

59. Dispositif selon l'une quelconque des revendications 25 à 58, **caractérisé en ce que** le dispositif (10) comporte un échangeur de température (50), par lequel les fumées épurées en provenance du réacteur d'épuration des fumées (42) peuvent être réchauffées ultérieurement par les fumées en provenance du foyer (12).

60. Unité d'échangeur de chaleur des fumées pour la récupération de la chaleur résiduelle, qui comprend la chaleur sensible résiduelle et la chaleur latente, des fumées d'un foyer (12), en particulier d'un foyer à mazout, dans lequel les fumées délivrent de la chaleur à un milieu porteur intermédiaire, par lequel de la chaleur peut être délivrée au moins temporairement à de l'eau de chauffage d'un circuit de chauffage (18), **caractérisé en ce que** l'unité d'échangeur de chaleur des fumées (144c, 144d) comprend un réacteur d'épuration des fumées (146) pour l'épuration des fumées au moyen d'un milieu de dépollution et un échangeur de chaleur résiduelle (148) pour la réception de chaleur depuis les fumées par le milieu porteur intermédiaire et **en ce que** le réacteur d'épuration des fumées (146), rapporté à la direction de la pesanteur, est disposé au-dessus d'un distributeur de milieu porteur intermédiaire (162) de l'échangeur de chaleur résiduelle (148).

61. Unité d'échangeur de chaleur des fumées selon la revendication 60, **caractérisée en ce que** le milieu de dépollution et le milieu porteur intermédiaire sont le même milieu.

62. Unité d'échangeur de chaleur des fumées selon la revendication 60 ou 61, **caractérisée en ce que** le distributeur de milieu porteur intermédiaire (162) est disposé à une extrémité inférieure d'une zone collectrice (160) du réacteur d'épuration des fumées, de telle sorte que la zone collectrice (160) forme une unité d'alimentation du distributeur de milieu porteur intermédiaire (160).

63. Unité d'échangeur de chaleur des fumées selon la revendication 62, **caractérisée en ce que** la zone collectrice (160) comporte une sortie (166) pour le milieu porteur intermédiaire, laquelle, rapporté à la direction de la pesanteur, est disposée à une distance verticale définie (164) du distributeur de milieu porteur intermédiaire (162) de l'échangeur de chaleur résiduelle (148).

64. Unité d'échangeur de chaleur des fumées selon l'une quelconque des revendications 60 à 63, **caractérisée en ce que** l'unité d'échangeur de chaleur des fumées (144d) comporte une entrée (110) pour le milieu porteur intermédiaire, laquelle, rapporté à la direction de la pesanteur, est disposée à une extrémité supérieure du réacteur d'épuration des fumées (146) ou à son voisinage.

65. Unité d'échangeur de chaleur des fumées selon la revendication 64, **caractérisée en ce que** le réacteur d'épuration des fumées (146) comprend au voisinage de son extrémité supérieure un distributeur de milieu de dépollution (114) relié à l'entrée (110), distributeur qui est configuré de telle sorte que le milieu de dépollution peut être distribué sur une surface d'épuration active du point de vue de l'épuration des fumées, dans un espace d'épuration (120) du réacteur d'épuration des fumées (146).

66. Unité d'échangeur de chaleur des fumées selon la revendication 65, **caractérisée en ce que** le distributeur de milieu de dépollution (114) du réacteur d'épuration des fumées (146) est un croisillon distributeur (115).

67. Unité d'échangeur de chaleur des fumées selon la revendication 65 ou 66, **caractérisée en ce que**, pour l'augmentation de la surface de contact entre les fumées à épurer et le milieu de dépollution, le réacteur d'épuration des fumées (146) comprend des éléments d'écoulement (124) pour le milieu de dépollution.

68. Unité d'échangeur de chaleur des fumées selon la revendication 67, **caractérisée en ce que** les éléments d'écoulement pour le milieu de dépollution comprennent une pluralité de plateaux (125), qui comportent une multitude d'ouvertures et qui, rapporté à la direction de la pesanteur, sont disposés à une distance verticale dans le réacteur d'épuration des fumées (146).

69. Unité d'échangeur de chaleur des fumées selon la revendication 67 ou 68, **caractérisée en ce que** des corps moulés (127) sont prévus comme éléments d'écoulement (124).

70. Unité d'échangeur de chaleur des fumées selon la revendication 69, **caractérisée en ce que** des anneaux de Raschig (127) sont prévus comme corps moulés.

71. Unité d'échangeur de chaleur des fumées selon l'une quelconque des revendications 60 à 70, **caractérisée en ce que** le réacteur d'épuration des fumées (146) de l'unité d'échangeur de chaleur des fumées (144d) comprend un élément traversé par le courant (158), lequel, rapporté à la direction de la pesanteur, est disposé à une distance verticale définie par rapport au distributeur de milieu porteur intermédiaire (162) de l'échangeur de chaleur résiduelle (148).

72. Unité d'échangeur de chaleur des fumées selon l'une quelconque des revendications 60 à 71, **caractérisée en ce que** l'unité d'échangeur de chaleur des fumées (144d) comporte une entrée (34b) pour les fumées au voisinage de son extrémité inférieure dans l'échangeur de chaleur résiduelle (148).

73. Unité d'échangeur de chaleur des fumées selon l'une quelconque des revendications 60 à 72, **caractérisée en ce que** l'unité d'échangeur de chaleur des fumées (144d) comporte un canal annulaire (154), au moyen duquel les fumées en provenance de l'échangeur de chaleur résiduelle (148) peuvent être amenées au réacteur d'épuration des fumées de l'unité d'échangeur de chaleur des fumées (144d).
